# EUROPEAN PATENT SPECIFICATION

(11) **EP 1 142 476 B1**
(45) Date of publication and mention of the grant of the patent: **05.06.2013**
(21) Application number: 99961422.5
(22) Date of filing: 27.12.1999
(51) Int. Cl.: A01N 25/12, A01N 25/34, A01N 25/16, A01N 25/00, A01N 33/22, A01N 37/26, A01N 43/56, A01N 47/36

(54) **FLOATING PESTICIDE COMPOSITIONS FOR PADDY FIELDS, METHOD FOR THE UTILIZATION THEREOF AND PROCESS FOR PRODUCING THE SAME**
SCHWIMMFÄHIGE PESTIZIDZUSAMMENSETZUNGEN FÜR REISFELDER, VERFAHREN ZU DEREN VERWENDUNG UND DEREN HERSTELLUNG
COMPOSITIONS PESTICIDES FLOTTANTES POUR RIZIERES, METHODE D'UTILISATION ET PROCEDE DE PREPARATION

(30) Priority: 07.01.1999 JP 200899; 25.06.1999 JP 18034299; 30.06.1999 JP 18655699; 21.09.1999 JP 26733199; 28.09.1999 JP 27361699
(43) Date of publication of application: 10.10.2001
(73) Proprietor: ISHIHARA SANGYO KAISHA, LTD., Osaka-shi, Osaka 550-0002 (JP)
(72) Inventor: YOKOYAMA, Masao, Taito-ku, Tokyo 100-0002 (JP); HAMAMURA, Kenshiro, Matsudo-shi, Chiba 270-2254 (JP); MAEDA, Masaru, Ishihara Sangyo K., Kusatsu-shi, Shiga 525--0025 (JP); KIKUGAWA, Hiroshi, Ishihara Sangyo K., Kusatsu-shi, Shiga 525--0025 (JP); OKUMURA, Yasuhiro, Ishihara Sangyo K., Kusatsu-shi, Shiga 525--0025 (JP); SHIMIZU, Manabu, Ishihara Sangyo K., Kusatsu-shi, Shiga 525--0025 (JP); NISHIMURA, Kengo Ishihara Sangyo K., Kusatsu-shi, Shiga 525--0025 (JP)
(74) Representative: Hartz, Nikolai
(86) International application number: PCT/JP1999/007341
(87) International publication number: WO 2000/040085

(56) References cited:
- JP-A- 6 056 604
- JP-A- 6 293 603
- JP-A- 7 002 602
- JP-A- 7 082 102
- JP-A- 7 233 002
- JP-A- 8 099 802
- JP-A- 8 099 803
- JP-A- 9 249 504
- JP-A- 10 109 905
- PATENT ABSTRACTS OF JAPAN vol. 1999, no. 01, 29 January 1999 (1999-01-29) & JP 10 287505 A (NIPPON NOHYAKU CO LTD; NEO RAITO KOSAN KK), 27 October 1998 (1998-10-27)
- PATENT ABSTRACTS OF JAPAN vol. 1998, no. 09, 31 July 1998 (1998-07-31) & JP 10 109905 A (KUMIAI CHEM IND CO LTD), 28 April 1998 (1998-04-28)
- PATENT ABSTRACTS OF JAPAN vol. 1998, no. 03, 27 February 1998 (1998-02-27) & JP 09 295903 A (KUMIAI CHEM IND CO LTD), 18 November 1997 (1997-11-18)
- DATABASE WPI Section Ch, Week 199502 Derwent Publications Ltd., London, GB; Class C07, AN 1995-009513 XP002354667 & JP 06 293603 A (SUMITOMO CHEM CO LTD) 21 October 1994 (1994-10-21)

## Description

### Technical Field of the Invention

The present invention relates to a water-buoyant agrochemical composition having a labor-saving property. Preferably the water-buoyant agrochemical composition can be directly applied to a paddy field.

### Background of the Related Art

Although various agrochemical compositions have been proposed which can be applied without stepping into the paddy field, most of such compositions are sedimented on the surface of soil when sprinkled in the paddy field. In such cases, it has been observed that there is a difference in view of agrochemical effectiveness between the applied sites and distant areas therefrom and moreover there are inconveniences that traces owing to treatment with agrochemicals remain near the sites to which the chemicals are applied and the agrochemically active components also remain locally, etc. An attempt for solving such a problem is found in JP, A, 05-139,906 (1993). Disclosed in the said JP, A, 05-139,906 (1993) is an effervescent agrochemical preparation for application to the surface of paddy water which consists of a solid composition containing an agrochemically active component, a carbonate, a water-soluble solid acid and an inorganic floating substance. It is also mentioned therein that the said inorganic floating substance is perlite, shirasu balloon or the like, capable of automatically floating on the surface of the water when applied thereon.

However, although perlite, shirasu balloon and the like as used in the above art float immediately after being applied on the surface of water, they finally sink into water within a short period whereby there are still problems that it is impossible to fully achieve the aimed object. Further, in the case of the agrochemical tablet composition which is one of the already proposed agrochemical compositions being applicable directly to a paddy field, the mainstream of its manufacturing process resides in a method of molding by compression with high pressure and, accordingly, a specific equipment in a large scale is essential whereby it is still not satisfactory in terms of the manufacturing costs.

Granular agrochemical compositions comprising a water-buoyant carrier are known from JP-A 10109905 and JP-A 09295903

An agrochemical tablet capable of floating up to the water surface is known from JP-A 06293603.

### Summary of the Invention

The present inventors have carried out an extensive investigation for solving such problems and succeeded in the present invention. The present invention particularly provides a water-buoyant (capable of floating on water) agrochemical composition having a labor-saving property (hereinafter, just referred to "agrochemical composition").

The present invention relates to water-buoyant agrochemical compositions as defined in the claims, particularly water-buoyant agrochemical compositions for paddy fields, which comprise not only at least an agrochemically active component and a surface-active agent, but also
(1) bubbles (pores or cavities) besides a carbonate and a solid acid,
(2) closed type hollows (hollow spheres or micro balloons) having a bulk density of less than 1, or
(3) closed type hollows having a bulk density of less than 1, a binder and a disintegrating agent.
The present invention also relates to methods for applying the aforementioned water-buoyant agrochemical composition to flooded paddy fields.

The present invention relates to water-buoyant agrochemical compositions for paddy fields which comprise not only at least an agrochemically active component and a surface-active agent, but also
(1) bubbles (pores or cavities) besides a carbonate and a solid acid,
(2) closed type hollows (hollow spheres or micro balloons) having a bulk density of less than 1, or
(3) closed type hollows having a bulk density of less than 1, a binder and a disintegrating agent.
The said agrochemical composition may be used in the form of packs coated or covered with a water-soluble film.

Secondly, the present invention relates to methods for applying the above agrochemical composition directly to flooded paddy fields. More particularly, the present invention relates to methods for applying the above agrochemical composition directly to a flooded paddy field to control noxious organisms including weeds. The application includes a method where the agrochemical composition is thrown into the flooded paddy field directly, a method where the agrochemical composition is applied to a water inlet or water-supplying pipe upon incorporation of water into a paddy field, etc., which may be appropriately selected. The said application to the paddy field may be carried out either before or after the rice planting.

Thirdly, the present invention relates to processes for the manufacture of water-buoyant agrochemical tablet compositions for paddy fields, which comprise a tabletting process wherein
(1) the compression degree with a tabletting machine ranges from 1 to 150 kg/cm² in the manufacture of tablets, and
(2) the tablet composition has a density of less than 1 g/cm³ and comprises not only at least an agrochemically active component and a surface-active agent, but also closed type hollows having a bulk density of less than 1, a binder and a disintegrating agent.
The instant manufacturing processes are free of compression molding at high pressure. As a result, it is possible to reduce the cost of production.

In another aspect, the present invention provides water-buoyant granular agrochemical compositions for paddy fields, which comprise at least an agrochemically active component, a surface-active agent, and closed type hollows having a bulk density of less than 1. Preferably, the water-buoyant granular agrochemical compositions for paddy fields are self-diffusive forms. The present invention also provides processes for the manufacture of the said granular agrochemical compositions and further methods for applying the said granular agrochemical composition directly to flooded paddy fields.

In a further aspect, the present invention provides water-buoyant agrochemical tablet compositions for paddy fields, which comprise at least an agrochemically active component, a surface-active agent, and closed type hollows having a bulk density of less than 1 wherein the density of the tablet composition is less than 1 g/cm³. The present invention also provides methods for applying the said agrochemical tablet composition directly to flooded paddy fields.

The above objectives and other objectives, features, advantages, and aspects of the present invention are readily apparent to those skilled in the art from the following disclosures. It should be understood, however, that the description of the specification including the following best modes of carrying out the invention, examples, etc. is illustrating preferred embodiments of the present invention and given only for explanation thereof. It will become apparent to the skilled in the art that a great number of variations and/or alterations (or modifications) of this invention may be made based on knowledge from the disclosure in the following parts and other parts of the specification without departing from the scope thereof as defined by the claims.

The term "and/or" used herein means the presence of both (1) a jointly connecting relation and (2) a selectively connecting relation. For example, in the case of "bubbles and/or dents", it is used in such a sense that said expression covers both (1) "bubbles and dents" and (2) "bubbles or dents". In other cases, the term "and/or" is used in the same sense that it covers both (1) a jointly connecting relation and (2) a selectively connecting relation as well.

### Best Mode for Carrying Out the Invention

The agrochemical compositions of the present invention are manufactured by processes usually carried out in the fields of pharmaceuticals and agrochemicals or by techniques similar thereto.

Among the agrochemical compositions of the present invention, products each having bubbles therein can be manufactured in the form of agrochemical compositions with bubbles mainly containing carbon dioxide gas and/or air , by (a) mixing an agrochemically active component, a surface-active agent, a carbonate and a solid acid with water or a water-containing substance, if necessary, together with a binder, (b) partially reacting a carbonate with a solid acid, and (c) filling the agrochemical mixture in a molding container while a carbon dioxide gas is generated, or by (a) mixing the above-mentioned components with water or a water-containing substance, and (b) filling the mixture in a molding container followed by partially reaction of a carbonate with a solid acid with the result that a carbon dioxide gas is generated. Such products may also be manufactured by methods including an appropriate heat treatment at any stage during the above manufacturing process. Various advantages are gained in the process including such a heat treatment. Examples of such advantages are: (1) it is possible to promote the generation of carbon dioxide gas; (2) it is possible to expand the volume of carbon dioxide gas and/or air included in the bubble, thereby improving the floating property of the agrochemical composition; (3) it is possible to raise the strength of the agrochemical composition; (4) it is possible to efficiently dry the agrochemical composition; etc. When accompanied with the heat treatment, the agrochemical composition is allowed to cool or forced to cool appropriately. In addition, the agrochemical composition may also be dried in the manufacturing procedure. The drying may be conducted under appropriately selected conditions at ambient temperature or heating conditions. The drying may also be carried out under appropriately selected conditions at atmospheric pressure or reduced pressure. The air contained in the agrochemical composition may be incorporated thereinto during steps for manufacturing the agrochemical composition of the present invention, including, for example, mixing, heating, being allowed to cool, cooling, drying, etc. Alternatively, the air contained therein may be incorporated in the form of substitutes for carbon dioxide gas generated by the reaction of the carbonate with the solid acid during or after the manufacture of the agrochemical composition according to the present invention or during the storage thereof.

The use of the above-mentioned water-containing substance (medium where water is homogeneously dispersed) is one of means effectively utilizable upon an efficient reaction of a small amount of water with a carbonate-solid acid couple. The water-containing substance as used in the present invention includes, for example, organic solvents, polymers, etc. Such water-containing substances may include those supplied in the form where water is contained in advance or those to which water is added upon use.

Further, the agrochemical compositions each containing closed-type hollows with a bulk density of less than 1 can be manufactured according to ordinary techniques in the art, for example, by mixing an agrochemically active component, a surface-active agent, and closed-type hollows, if necessary, together with an excipient such as a carrier, a binder, a physical property-improving agent, a stabilizer and a disintegrating agent.

For granular agrochemical compositions, the above mixture is admixed with water, kneaded, granulated with an extruding granulator, dried, and classified into uniform granules. It may also be possible to granulate a powdery mixture with a tumbling granulator while admixing with water, followed by drying and classification into uniform granules. Further, it may be possible to disperse a powdery mixture in water followed by granulation with a spraying granulator (if necessary, classification into uniform granules). Such granular agrochemical compositions may be manufactured with a fluid-bed granulator capable of spraying and granulating an agrochemically active component, a surface-active agent, and closed-type hollows with a bulk density of less than 1 (if necessary, a carrier, a binder, a physical property-improving agent, a stabilizer, etc.) while a powdery mixture is fluidized, followed by classification into uniform granules. The particle size of each sized granule is usually within a range of 0.1 to 10 mm, preferably 0.3 to 6 mm, or more preferably 0.3 to 2 mm, in view of the sake of convenience in handling and the disintegrating property of the composition. The weight of each granule is less than 1 gram.

For agrochemical tablet compositions, an agrochemically active component is mixed with a surface-active agent and a disintegrating agent (or an agrochemically active component is admixed with a pre-mixture of a surface-active agent and a disintegrating agent), then the resultant mixture is pulverized to adjust their particle size to 1 to 200 µm, next admixed with closed-type hollows having a bulk density of less than 1 and a binder, and finally formed into tablets with a tabletting machine or a briquetting machine. In that case, the compression degree is appropriately controlled to adjust the product density to less than 1 g/cm³ so that the agrochemical tablet composition may have a property of floating on water. The compression degree may vary depending upon manufacturing devices (tabletting machines), but it preferably ranges from 1 kg/cm² to 150 kg/cm², or more preferably from 20 kg/cm² to 100 kg/cm², while the product.density of the manufactured agrochemical composition preferably ranges from 0.3 to 0.99 g/cm³, or more preferably from 0.8 to 0.95 g/cm³.

The agrochemical tablet compositions manufactured according to the present invention are in the form of various shapes such as tablets, spheres, columns, rectangular solids, cubes, oval shapes, almond-like shapes, charcoal ball-like shapes, doughnut-like shapes, lens-like shapes, bell-like shapes, circular plates, long-circular plates, rectangular plates, rod-like shapes and elliptic spheres. In view of their floatability, operatability, etc., agglomerate products (including tablets, products shaped like an almond, a charcoal ball, or a lens, briquettes, etc.) are preferred.

Since the agrochemical efficacy is not greatly affected by their product shape, any product shape, size and weight may be acceptable. However, when the shape is of a tablet for example, each tablet has preferably such a size in view of its manufacture and application that its diameter ranges from 1 cm to 7 cm, its thickness from 1 cm to 5 cm and its weight from 1 g to 110 g. Those products having any of other shapes are formed into the similar size to the above for tablets. When the product is too heavy, it is apt to be embedded into soils or hardly provides a sufficient spreading; however, when it is too light, it becomes less contributory to the productivity, to the subdividability, or to the labor-saving in sprinkling of the agrochemical composition.

The agrochemical composition of the present invention having bubbles therein has bubbles (each mainly containing (i) carbon dioxide gas generated by a partial reaction of a carbonate with a solid acid in the presence of water and/or (ii) air with which the said carbon dioxide gas is substituted), and also effervesces (carbon dioxide gas being generated) as a result of reaction of residual carbonate-solid acid couples with paddy water. Therefore, the said composition usually floats on the water when applied to the flooded paddy field. In addition, since the agrochemical composition of the present invention has bubbles therein, its contacting area to paddy water is large and, as a result, generation of carbon dioxide gas will be accelerated, whereby the agrochemical composition may float over a wide area with the result that the agrochemically active component would be efficiently delivered to a whole area of the paddy field.

Further, since the agrochemical composition of the present invention wherein the closed-type hollows having a bulk density of less than 1 are contained holds the closed-type hollows with a bulk density of less than 1, the composition can float on the water when applied onto the paddy field and the agrochemically active component can very effectively diffuse over the whole area of the paddy field mainly due to the action relying on the surface-active agent. When the agrochemical compositions of the present invention, particularly granular compositions, are applied in the form of packed preparations, the compositions may sometimes once sink in the water, but even in such a case, because of the closed-type hollows (having a bulk density of less than 1) contained therein, the packed preparations themselves float on the surface of paddy water later, or the agrochemical compositions released from the packed preparations float on the surface of paddy water whereby desired efficacies can be achieved similarly.

Furthermore, since the agrochemical composition of the present invention wherein the closed-type hollows having a bulk density of less than 1 are contained together with the binder and the disintegrating agent holds the closed-type hollows therein, the composition can float on the surface of paddy water when applied to the flooded paddy field. Simultaneously, the agrochemical composition floating on the surface of the water is disintegrated by the action of disintegrating agents. The agrochemical composition of the present invention is disintegrating together with floating with the result that the agrochemical composition floats all over a wide area thanks to the surface-active agent and, therefore, the agrochemically active component can efficiently diffuse all over the area of the paddy field.

Thus, even when the agrochemical compositions of the present invention are limited to merely local applications on the paddy field, the agrochemically active components diffuse throughout the paddy field without remaining in the applied site, thereby leading to the sufficient control of noxious organisms (including weeds) without causing any adverse effect due to chemicals on rice. As a result, the agrochemical compositions of the present invention will reduce significantly the labor of application in paddy fields. In addition, the excellently-buoyant agrochemical compositions of the present invention have advantages that no traces of chemicals are noted on the applied sites because all of the agrochemically active components can be dissolved in or efficiently delivered all over paddy water. Further, the agrochemical compositions of the present invention can be manufactured by simple processes as aforementioned. Unlike in the prior art, particularly the agrochemical tablet compositions do not demand compression molding at high pressure wherein special facilities are required, thereby leading to great reduction of costs for manufacturing the same. As such, the agrochemical compositions of the present invention not only have various characteristics and advantages but also are highly practical.

Agrochemically active components as used in the agrochemical compositions of the present invention include herbicidally active components, active components for plant growth regulators, fungicidally or bactericidally active components, and insecticidally active components. Described below are representatives of such components, but the agrochemically active components as used herein are not limited to. Even though no specific mention is made herein, it is natural that the agrochemically active components may include their salts, alkyl esters, and other forms when they exist in the form of salts, alkyl esters, etc.

Herbicidally active components include, for example, carbamate herbicides such as S-(4-chlorobenzyl)-N,N-diethyl-thiocarbamate (common name: benthiocarb); urea herbicides such as 1-(α , α -dimethylbenzyl)-3-(p-tolyl)urea (common name: dymron); amide herbicides such as 2-chloro-N-ethoxymethyl-6'-ethylacet-O-toluidide (common name: acetochlor), 2-chloro-2',6'-diethyl-N-(butoxymethyl)acetanilide (common name; butachlor), 2-chloro-N-(3-methoxy-2-thenyl)-2',6'-dimethyl-acetanilide (common name: thenylchlor), 2-chloro-2',6'-diethyl-N-(2-propoxyethyl)acetanilide (common name: pretilachlor), and (RS)-2-bromo-N-(α,α -dimethylbenzyl)-3,3-dimethylbutyramide (common name: bromobutide); phenoxy herbicides such as (2,4-dichlorophenoxy)acetic acid (common name: 2,4-D), (2-methyl-4-chlorophenoxy)acetic acid (common name: MCP), and (2-methyl-4-chlorophenoxy)butanoic acid (common name: MCPB); pyrazole herbicides such as 2-[4-(2,4-dichlorobenzoyl)-1,3-dimethylpyrazol-5-yloxy)acetophenone (common name: pyrazoxyfen), 4-(2,4-dichlorobenzoyl)-1,3-dimethyl-5-pyrazolyl-p-toluenesulfonate (common name: pyrazolate), and 2-[4-(2,4-dichloro-m-toluoyl)-1,3-dimethoxylpyrazol-5-yloxy]-4'-methylacetophenone (common name: benzofenap); triazine herbicides such as 2-methylthio-4,6-bis(ethylamino)-s-triazine (common name: simetryn), and 2-methylthio-4-ethylamino-6-(1,2-dimethyl-propylamino)-s-triazine (common name: dimethametryn); diphenyl ether herbicides such as 5-(2,4-dichlorophenoxy)-2-nitroanisole (common name: chlomethoxyfen), methyl 5-(2,4-dichlorophenoxy)-2-nitrobenzoate (common name: bifenox); fused ring herbicides such as 2-amino-3-chloro-1,4-naphthoquinone (common name: ACN), (RS)-2-[2-(3-chlorophenyl)-2,3-epoxypropyl]-2-ethylindan-1,3-dione (common name: indanofan); phosphorus herbicides such as O,O-di-isopropyl-2-(benzenesulfonamido)ethyl dithiophosphate (common name: SAP); dinitroaniline herbicides such as N-(1-ethylpropyl)-3,4-dimethyl-2,6-dinitroaniline (common name: pendimethalin); sulfonylurea herbicides such as methyl α -(4,6-dimethoxypyrimidin-2-ylcarbamoylsulfamoyl)-o-toluate (common name: bensulfuron methyl), ethyl 5-(4,6-dimethoxy-pyrimidin-2-ylcarbamoylsulfamoyl)-1-methylpyrazole-4-carboxylate (common name: pyrazosulfuron ethyl), 1-(2-chloroimidazo[1,2-a]pyridin-3-ylsulfonyl)-3-(4,6-dimethoxypyrimidin-2-yl)urea (common name: imazosulfuron), 1-(4,6-dimethoxypyrimidin-2-yl)-3-[1-methyl-4-(2-methyl-2H-tetrazol-5-yl)pyrazol-5-ylsulfonyl]urea (common name: azimsulfuron); heterocyclic herbicides such as N,N-diethyl-3-mesitylsulfonyl-1H-1,2,4-triazole-1-carboxamide (common name: cafenstrole), methyl 2-[(4,6-dimethoxypyrimidin-2-yl)oxy]-6-[1-(methoxyimino)ethyl]benzoate (common name: pyriminobac methyl), 5-tert-butyl-3-[2,4-dichloro-5-(prop-2-ynyloxy)phenyl]-1,3,4-oxadiazol-2(3H)-one (common name: oxadiargyl), 3-(4-chloro-5-cyclopentyloxy-2-fluorophenyl)-5-(1-methyl-ethylidene)oxazolidine-2,4-dione (common name: pentoxazone), n-butyl 2-[4-(2-fluoro-4-cyanophenoxy)phenoxy]propionate (common name: cyhalofop butyl), 4-(2-chlorophenyl)-N-cyclohexyl-4,5-dihydro-N-ethyl-5-oxo-1H-tetrazole-1-carboxamide, [3-(2-chloro-4-methylsulfonylbenzoyl)-4-phenylthio]bicyclo[3.2.1]oct-3-en-2-one [common name: benzobicyclon), etc.

Active components for plant growth regulators include, for example, heterocyclic plant growth regulators such as (2RS,3RS)-1-(4-chlorophenyl)-4,4-dimethyl-2-(1H-1,2,4-triazol-1-yl)pentan-3-ol (common name: paclobutrazol), etc.

Fungicidally or bactericidally active components include, for example, organophosphorus fungicides and bactericides such as O,O-di-isopropyl-S-benzyl phosphorothioate (common name: IBP); amide fungicides and bactericides such as α, α, α -trifluoro-3'-isopropoxy-o-toluanilide (common name: flutolanil); heterocyclic fungicides and bactericides such as 3-allyloxy-1,2-benzisothiazole 1,1-dioxide (common name: probenazole), 1,2,5,6-tetrahydropyrrolo[3,2,1-ij]quinolin-4-one (common name: pyroquilon), etc.

Insecticidally active components include, for example, organophosphorus insecticides such as O,O-diethyl O-(2-isopropyl-6-methylpyrimidin-4-yl)phosphorothioate (common name: diazinon); carbamate insecticides such as 1-naphthyl-N-methylcarbamate (common name: NAC); pyrethroid insecticides such as (RS)-α -cyano-3-phenoxybenzyl (RS)-2,2-dichloro-1-(4-ethoxyphenyl)cyclopropanecarboxylate (common name: cycloprothrin), and 2-(4-ethoxyphenyl)-2-methylpropyl 3-phenoxybenzyl ether (common name: etofenprox); heterocyclic insecticides such as 1-(6-chloro-3-pyridylmethyl)-N-nitro-imidazolidin-2-ylideneamine (common name: imidacloprid), and N,N-dimethyl-1,2,3-trithian-5-ylamine (common name: thiocyclam); aromatic insecticides such as S,S'-2-dimethylaminotrimethylene di(benzenethiosulfonate) (common name: bensultap); etc.

The agrochemically active components are employed alone or in the form of mixtures containing two or more species. When mixed, an admixture ratio thereof can be suitably selected. The agrochemical compositions of the present invention contain at least one member selected from the agrochemically active components at doses determined by a number of factors. These factors include: their species, and application modes. An agrochemically effective amount of an active component is ordinarily applied at rates from about 0.01 to 80 wt %.

When the aforementioned agrochemically active component is solid, the said active component is usually pulverized in advance for improving the solubility and the dispersing property into water and is preferably used in the form of microparticles having a particle size of from 1 to 200 µ m, or more preferably from 1 to 100 µ m. When the agrochemically active component is liquid at room temperature, the said agrochemically active component may be adsorbed by or carried on the surface of the closed-type hollow having a bulk density of less than 1 or a member selected from a carrier, a binder, a physical property-improving agent, and the like which will be mentioned below so that it would not be leaked out from the agrochemical composition of the present invention. When the agrochemically active component is solid at room temperature and highly soluble in organic solvents, it may be dissolved in an organic solvent for stabilizing it, whereupon it may be treated in the same fashion as in the case where the agrochemically active component is liquid at room temperature.

Organic solvents in which agrochemically active components being in solid forms at room temperature and highly soluble in any of such organic solvents can be dissolved may be selected from various species. Representatives of such solvents include, for example, hydrocarbons such as xylene, ethylbenzene, trimethylbenzene, propylbenzene, isopropylbenzene, diethylbenzene, sec-butylbenzene, tert-butylbenzene, pentyl-benzene, triethylbenzene, tert-butyltoluene, polyethylbenzene, diamylbenzene, diisopropylbenzene, cymene, amylnaphthalene, tetralin, decalin, aromatic petroleum naphtha, light solvent naphtha, and heavy solvent naphtha; halogenated hydrocarbons such as chlorobenzene; alcohols such as methyl alcohol, ethyl alcohol, propyl alcohol, isopropyl alcohol, pentanol, hexanol, octanol, myristyl alcohol, cetyl alcohol, stearyl alcohol, oleyl alcohol, decanol, dodecyl alcohol; ethers such as anisole, phenetol, butyl phenyl ether, methylanisole, and dihexyl ether; various esters of carboxylic acids wherein the carboxylic acids include, for example, acetic acid, oleic acid, lauric acid, myristic acid, palmitic acid, adipic acid, adipic acid diisodecyl, adipic acid isodecyl, maleic acid, sebacic acid, phthalic acid, trimellitic acid, and the like. Representatives of such esters include benzyl esters, methyl esters, ethyl esters, propyl esters, isopropyl esters, butyl esters, 2-ethylhexyl esters, oleyl esters, decyl esters, isobutyl esters, isodecyl esters, octyl esters, nonyl esters, isononyl esters, dodecyl esters, tridecyl esters, etc.

The organic solvents may be employed alone or in the form of mixtures containing two or more species. When admixed, an admixture ratio thereof can be suitably selected. The agrochemical composition may contain one or more organic solvents at suitably selected rates, ordinarily at rates ranging from 0.5 to 40 wt%.

Surface-active agents as used for the agrochemical compositions of the present invention include, for example, anionic surfactants such as fatty acid salts, alkylsulfosuccinates, di-alkylsulfosuccinates, polycarboxylates, alkyl sulfuric acid ester salts, alkyl sulfates, alkyl aryl sulfates, alkyl di-glycol ether sulfates, alcohol sulfuric acid ester salts, alkyl sulfonates, alkyl aryl sulfonates, aryl sulfonates, lignin sulfonates, alkyl di-phenyl ether di-sulfonates, polystyrene sulfonates, alkyl phosphoric acid ester salts, alkyl aryl phosphates, styryl aryl phosphates, polyethoxylated alkyl ether sulfuric acid ester salts, polyethoxylated alkyl aryl ether sulfates, polyethoxylated alkyl aryl ether sulfuric acid ester salts, polyethoxylated alkyl ether phosphates, polyethoxylated alkyl aryl phosphoric acid ester salts, naphthalenesulfonic acid-formalin condensation product salts, polyacrylates, sodium acrylate homopolymers, and isobutylene-maleic anhydride copolymers; nonionic surfactants such as sorbitan fatty acid esters, glycerin fatty acid esters, fatty acid polyglycerides, fatty acid alcohol polyglycol ethers, acetylene glycols, acetylene alcohols, oxyalkylene block polymers, polyoxyethylene alkyl ethers, polyoxyethylene alkyl aryl ethers, polyoxyethylene styryl aryl ethers, polyoxyethylene glycol alkyl ethers, polyoxyethylene fatty acid esters, polyoxyethylene sorbitan fatty acid esters, polyoxyethylene glycerin fatty acid esters, polyoxyethylene hydrogenated castor oils, polyoxypropylene fatty acid esters, polyoxyethylene-polyoxypropylene glycols, and polyalkylene glycols; and other surfactants. The surface-active agents may be employed alone or in the form of mixtures containing two or more species. When mixed, an admixture ratio thereof can be suitably selected. The agrochemical composition of the present invention may contain one or more members selected from the surface-active agents at suitably selected rates, ordinarily at rates ranging from 0.1 to 40 wt%.

These surface-active agents as used herein are usually those aiding agrochemically active components in spreading and/or migrating in paddy water. Among them, those acting as binders (those facilitating the strength and resistance of the agrochemical composition) or as disintegrators are also included.

The closed-type hollow having a bulk density of less than 1 as used in the agrochemical composition of the present invention are made of ceramics. Among them, preferred closed-type hollows are those having an average particle size of not more than 400µ m. Examples of the closed-type hollows are ceramic fillers such as E-SPHERES SL-150 and E-SPHERES SL-350 (both are trade names, Erivirospheres Pty Ltd.). The closed-type hollows may be used alone or in the form of mixtures containing two or more species. When mixed, an admixture ratio thereof may be appropriately selected. The agrochemical compositions of the present invention may contain the closed-type hollows at suitably selected rates, ordinarily at rates ranging from 0.5 to 90 wt%. When granular agrochemical compositions are to be prepared, the closed-type hollows are admixed at rates of at least 10 wt%, or preferably at rates ranging from 25 to 90 wt%. When agrochemical tablet compositions are to be prepared, the closed-type hollows are admixed desirably at rates ranging from 0.5 to 80 wt%.

Binders as used for the agrochemical compositions of the present invention include, for example, various gums such as guar gum, locust bean gum, gum tragacanth, xanthan gum, and gum arabic; alginic acid derivatives such as sodium alginate, ammonium alginate, and alginic acid propylene glycol esters; organic polymers such as polyvinyl alcohol, polyvinylpyrrolidone, polyvinyl methacrylate, polyethylene oxide, polyacrylic acid, sodium polyacrylate, and polyacrylamide; water-soluble proteins derived from animals and plants, including egg white, albumin, casein, gelatin and the like; cellulose derivatives such as methylcellulose, carboxymethylcellulose, carboxymethylcellulose sodium, carboxyethyl cellulose, hydroxyethyl cellulose, hydroxypropyl cellulose, and hydroxypropyl methylcellulose; starches such as dextrin, starch, carboxymethylstarch sodium, hydroxyethylstarch, and hydroxypropylstarch; lignin sulfonic acid derivatives such as sodium lignin sulfonates, and, calcium lignin sulfonates; and the like. Among them, those acting as disintegrators may also be included. The binders may be employed alone or in the form of mixtures containing two or more species. When mixed, an admixture ratio thereof can be suitably selected. The agrochemical composition of the present invention may contain one or more members selected from the binders at suitably selected rates, ordinarily at rates ranging from 0.1 to 50 wt%.

Disintegrating agents (disintegrators) as used for the agrochemical compositions of the present invention are selected from those conventionally utilizable in the fields of pharmaceuticals, agrochemicals, and foods. Representatives of such disintegrators include combinations of carbonates with solid acids, agar, starch, hydroxypropylstarch, sodium alginate, carboxymethyl starch ether, gum arabic, gum tragacanth, gelatin, casein, crystalline cellulose, carboxymethylcellulose calcium, Tween, Pluronic, sodium laurate, carboxylic resins, ammonium sulfate, potassium chloride, sodium chloride, urea, anionic surfactants, calcium chloride, magnesium chloride, aluminum chloride, glucose, lactose, sodium glutamate, sodium inosinate, dextrin, etc. They also include mineral substances capable of swelling/disintegrating with water, such as bentonite. They may be employed alone or in the form of mixtures containing two or more species. When mixed, an admixture ratio thereof can be suitably selected. The agrochemical composition of the present invention may contain one or more members selected from the disintegrators at suitably selected rates, ordinarily at rates ranging from 0.5 to 80 wt%. The aforementioned disintegrating agents include not only those acting as binders upon the manufacture of the agrochemical compositions but also those acting as surface-active agents which distribute or spread agrochemically active components when the agrochemical composition is thrown in paddy fields. Accordingly, if the disintegrating agent is required to have such functions, an admixture ratio thereof may be suitably controlled.

When carbonate and solid acid couples are employed as the disintegrators, such carbonates include salts of carbonic acid or bicarbonic acid with alkali metals, alkali earth metals, ammonia, etc. Representatives of such carbonic acid salts are sodium carbonate, potassium carbonate, calcium carbonate, lithium carbonate, ammonium carbonate, calcium carbonate, magnesium carbonate, sodium bicarbonate, potassium bicarbonate, ammonium bicarbonate, sodium sesquicarbonate, potassium sesquicarbonate, ammonium sesquicarbonate, etc. Examples of such solid acids are citric acid, succinic acid, maleic acid, lactic acid, fumaric acid, tartaric acid, oxalic acid, malonic acid, malic acid, adipic acid, p-toluenesulfonic acid, sulfamic acid, boric acid, sodium dihydrogen phosphate, potassium dihydrogen phosphate, etc. The carbonates and solid acids can be employed alone or in the form of mixtures containing two or more species, respectively. When mixed, an admixture ratio thereof may be suitably selected.

The agrochemical composition of the present invention may be admixed with at least one member selected from excipients such as carriers, physical property-improving agents and stabilizers if necessary.

With regard to the carrier, there is no particular limitation so far as it is a carrier utilizable for conventional agrochemical compositions. Examples of such carriers are inorganic carriers such as perlite, talc, bentonite, calcium carbonate, acid clay, silica rock, zieclite, diatomaceous earth, kaolin, sericite and white carbon; and organic carriers such as starch, glucose, lactose, sucrose, sawdust, straw, pulp and rice hulls. The carriers may be employed alone or in the form of mixtures containing two or more species. When mixed, an admixture ratio thereof may be suitably selected. The agrochemical compositions may contain the carrier at suitably selected rates, ordinarily at rates ranging from 0.1 to 50 wt%.

The physical property-improving agents may include any substance so far as they can improve the fluidity of then agrochemical composition so as to potentiate the spreading ability on the surface of the water. Examples of such agents are powders which are insoluble or hardly soluble in water, such as polymer powders including white carbons, paraffin powders and polyethylene wax and the like. The physical property-improving agents may be used alone or in the form of mixtures containing two or more species. When mixed, an admixture ratio thereof may be appropriately selected. The agrochemical compositions of the present invention may contain the physical property-improving agent at appropriately selected rates, usually at rates ranging from 0.5 to 40 wt%.

The stabilizers are substances capable of improving the storage stability of the agrochemical composition. For example, in the case where the agrochemical composition contains the agrochemically active component apt to be hydrolyzed (such as a sulfonylurea-type active component), the stabilizer corresponds to drying agents capable of inhibiting contact between the agrochemically active component and moisture either contained in air or with which the agrochemical composition is contaminated so as to suppress the age-based changes (degradation) of the agrochemically active component. When a carbonate-solid acid couple is used as a disintegrating agent in the agrochemical composition of the present invention, storage stability of the agrochemical composition may be sometimes insufficient and its main cause is that the carbonate-solid acid couple reacts with the moisture either contained in air or with which the agrochemical composition is contaminated whereupon carbon dioxide gas is generated. As a result thereof, the agrochemical composition comes to have an insufficient disintegrating property upon application to the flooded paddy field; the agrochemically active component comes to have an insufficient solubility and dispersing property upon the application; or there will happen troubles that the bag is accidentally swollen or broken when the agrochemical composition is packaged in an aluminum-laminated bag. Further, there are some cases where water is by-produced accompanied by generation of carbon dioxide gas, thereby leading to problems that not only generation of carbon dioxide gas is more promoted but also, depending upon agrochemically active component types, their age-based stability may be deteriorated. Examples of such agrochemically active components are sulfonylurea chemicals and the like. In the present invention, the agrochemical composition may be in admixture with a stabilizer for solving such problems.

Examples of the stabilizers are drying agents which mainly retain an efficiency of controlling or inhibiting the contact of a carbonate and solid acid couple with water; carbon dioxide-absorbents which mainly retain an efficiency of absorbing produced carbon dioxide gas; etc. Drying agents (desiccants) include, for example, boric anhydride (B₂O₃), metaboric acid (HBO₂), burnt lime (CaO), barium oxide (BaO), boric acid (H₃BO₃), aluminum oxide (Al₂O₃), magnesium oxide (MgO), sodium aluminate (NaAlO₂), iron oxide (FeO, α -Fe₂O₃, γ -Fe₂O₃, Fe₃O₄), silica gel, anhydrous calcium chloride, calcium hydride (CaH₂), lithium aluminum hydride (LiAlH₄), anhydrous sodium sulfate, anhydrous cupric sulfate, anhydrous calcium sulfate, zeolite, anhydrous calcium silicate, titanium oxide, silicon dioxide, activated charcoal, sodium aluminate, etc. Carbon dioxide-absorbents include, for example, calcium hydroxide (slaked lime), magnesium hydroxide, etc. Among them, the drying agents are preferably boric anhydride, magnesium oxide, and the like, and the CO₂-absorbents are preferably calcium hydroxide, magnesium hydroxide, and the like. A desired object of the stabilizer can be achieved either by adding it to the agrochemical composition without any modification thereof or by packing itself in another bag followed by packaging the resultant bag together with a stabilizer-free agrochemical composition in an aluminum-laminated bag, etc. The stabilizers may be used alone or in the form of mixtures containing two or more species. When mixed, an admixture ratio thereof may be appropriately selected. The agrochemical compositions of the present invention may contain the stabilizer at appropriately selected rates, usually at rates ranging from 0.1 to 40 wt%.

The agrochemical composition of the present invention may suitably contain other agrochemically active components so far as each of the above-mentioned agrochemically active components is not deteriorated in terms of its the water-solubility and/or floating/dispersing property in water. It is also possible to use conventionally available agricultural excipients such as solvents, anti-degrading agents, agents for reducing or alleviating damages by chemicals and dispersion-stabilizers.

The agrochemical composition of the present invention may be applied to paddy fields at dosage rates ranging from 10 to 3,000 g per 10 ares of the paddy field, or preferably 100 to 1,000 g per 10 ares of the paddy field. The granular agrochemical composition can be employed by convenient application techniques, i.e., by treating paddy fields directly with the granular composition per se at dosage rates ranging from 10 to 3,000 g per 10 ares, or preferably 100 to 1,000 g per 10 ares; by packing the granular composition (10 to 100 g each) in a water-soluble film to give packed preparations (agrochemical packs) followed by throwing the packs from paddy ridges to apply the granular composition to paddy fields at dosage rates ranging from 10 to 3,000 g per 10 ares, or preferably 100 to 1,000 g per 10 ares; by applying the granular composition to a water inlet or to a water supplying pipe; etc. For the agrochemical tablet compositions, each tablet is usually produced to have an amount of 1.0 to 110 g. The agrochemical tablet composition may be applied to paddy fields at dosage rates ranging from 50 to 3,000 g per 10 ares, or preferably 100 to 1,000 g per 10 ares. A paddy field having an area of 10 ares usually receives 1 to 300 tablets, or preferably 1 to 150 tablets. Even for cases other than the granular agrochemical composition, it is also possible to apply the agrochemical compositions after appropriately packaging them in a water-soluble film or the like in the same fashion as in the case of the above-mentioned granular agrochemical composition.

The water-soluble film which is used for packing the agrochemical composition of the present invention to prepare agrochemical packs as aforementioned includes any material so far as it is quickly (for example, within about several seconds to 24 hours) dissolved therein when the agrochemical composition of the present invention is thrown into the paddy field. Examples of such water-soluble films are polymer films made from polyvinyl alcohol, denatured polyvinyl alcohol, water-soluble vinylon, water-soluble dextrin, polyethylene glycol, carboxymethylcellulose, hydroxyethyl cellulose, methylcellulose, alginate, gelatin, pectin, pullulan, polyvinylpyrrolidone, polyacrylate, polyethylene oxide, starch or the like; and papers, fibers and the like where the above-mentioned water-soluble film is applied thereon or impregnated thereinto. An appropriate thickness of such a film ranges from 10 to 50µ m, or preferably from 20 to 40µ m.

### Examples

Described below are examples, including test examples, of the present invention which are provided only for illustrative purposes, and not to limit the scope of the present invention. The following examples are intended merely to illustrate the best mode now known for practicing the invention but the invention is not to be considered as limited to the details of such examples. It should be understood that numerous variations, equivalents and modifications that would be within the purview of one skilled in this art can be effected without departing from the scope of the invention as defined by the claims.

### Example 1

(1) Bensulfuron methyl (common name; 1.16 parts by weight) as an agrochemically active component, 2 parts by weight of Newkalgen SX-C (sodium dodecylbenzenesulfonate; Takemoto Oil & Fat Co., Ltd., Japan) and 3 parts by weight of SOKALAN PA30CL (sodium polyacrylate; BASF) as surface-active agents, 20 parts by weight of Perlite #36 (Toko-Perlite Industry Co., Ltd., Japan) as a carrier and 29.69 parts by weight of E-SPHERES SL150 (Envirospheres Pty Ltd.; particle size range: 20 to 150 microns; average particle size: 100 microns) as a close-type hollow having a bulk density of less than 1 were used. All the components were blended into a homogeneous powdery mixture.
(2) To 4.12 parts by weight of cyhalofop butyl (common name) as an agrochemically active component was added VINYCIZER 50 (di-isodecyl adipate; Kao Corporation, Japan; 24.72 parts by weight) as an organic solvent, and the mixture was dissolved with heating at 60°C to form a liquefied mixture to which pretilachlor (common name; 10.31 parts by weight) was added as an agrochemically active component to prepare a homogeneous mixed solution.
(3) To the powdery mixture (1) was added the mixed solution (2) and OLFINE STG (3 parts by weight; acetylene glycol type; Nissin Chemical Industry Co., Ltd., Japan) as a surface-active agent and the resultant mixture was kneaded with 10 parts by weight of a 20% aqueous gelatin solution (Nacalai Tesque, Inc., Japan) and extruded with a DOME GRAN granulator (Fuji Paudal Co., Ltd., Japan; type DG-L1) equipped with a screen of 1.2 mm. The granules were dried with a warm air stream (60°C) for 2 hours and sized (12 to 24 mesh) to give an agrochemical composition (granules).

### Example 2

The procedure of Example 1 was repeated except that the amount of Perlite #36 was changed to 10 parts by weight, the amount of E-SPHERES SL150 was changed to 47.93 parts by weight and the amount of VINYCIZER was changed to 16.48 parts by weight to give an agrochemical composition (granules).

### Example 3 .

The procedure of Example 1 was repeated except that the amount of Perlite #36 was changed to 10 parts by weight, the amount of E-SPHERES SL150 was changed to 50.93 parts by weight, the amount of VINYCIZER 50 was changed to 16.48 parts by weight and OLFINE STG was omitted to give an agrochemical composition (granules).

### Example 4

The procedure of Example 1 was repeated except that the amount of E-SPHERES SL150 was changed to 32.69 parts by weight and OLFINE STG was omitted to give an agrochemical composition (granules).

### Example 5

(1) Bensulfuron methyl (common name; 1.16 parts by weight) as an agrochemically active component, 2 parts by weight of Newkalgen SX-C (sodium dodecylbenzenesulfonate; Takemoto Oil & Fat Co., Ltd., Japan) as a surface-active agent, 10 parts by weight of Perlite #36 (Toko-Perlite Industry Co., Ltd., Japan) as a carrier, 3 parts by weight of AMYCOL 6H (enzymatically modified dextrin (malto dextrin); Nippon Starch Chemical Co., Ltd., Japan) as a binder and 47.93 parts by weight of E-SPHERES SL150 (Envirospheres Pty Ltd.; particle size range: 20 to 150 microns; average particle size: 100 microns) as a close-type hollow having a bulk density of less than 1 were used. All the components were blended into a homogeneous powdery mixture.
(2) To 4.12 parts by weight of cyhalofop butyl (common name) as an agrochemically active component was added VINYCIZER 50 (diisodecyl adipate; Kao Corporation, Japan; 16.48 parts by weight) as an organic solvent, and the mixture was dissolved with heating at 60°C to form a liquefied mixture to which pretilachlor (common name; 10.31 parts by weight) was added as an agrochemically active component to prepare a homogeneous mixed solution.
(3) To the powdery mixture (1) was added the mixed solution (2) and OLFINE STG (3 parts by weight; acetylene glycol type; Nissin Chemical Industry Co., Ltd., Japan) as a surface-active agent and the mixture was kneaded with 10 parts by weight of a 20% aqueous gelatin solution (Nacalai Tesque, Inc., Japan) and extruded with a DOME GRAN granulator (Fuji Paudal Co., Ltd. Japan; type DG-L1) equipped with a screen of 1.2 mm. The granules were dried with a warm air stream (60°C) for 2 hours and sized (12 to 24 mesh) to give an agrochemical composition (granules).

### Example 6

The procedure of Example 5 was repeated except that the amount of E-SPHERES SL150 was changed to 50.93 parts by weight and OLFINE STG was omitted to give an agrochemical composition (granules).

### Example 7

(1) Bensulfuron methyl (common name; 1.16 parts by weight) as an agrochemically active component, 3 parts by weight of Newkalgen SX-C (sodium dodecylbenzenesulfonate; Takemoto Oil & Fat Co., Ltd., Japan) as a surface-active agent, 3 parts by weight of AMYCOL 6H (enzymatically-modified dextrin (malto dextrin); Nippon Starch Chemical Co., Ltd., Japan) as a binder, 26.5 parts by weight of GRAFLOW M (granular corn starch; Nippon Starch Chemical Co., Ltd., Japan) as a carrier and 39.67 parts by weight of E-SPHERES SL150 (Envirospheres Pty Ltd.; particle size range: 20 to 150 microns; average particle size: 100 microns) as a close-type hollow having a bulk density of less than 1 were used. All the components were blended into a homogeneous powdery mixture.
(2) To 8.24 parts by weight of VINYCIZER 50 (diisodecyl adipate; Kao Corporation, Japan) as an organic solvent was added cyhalofop butyl (common name; 4.12 parts by weight) as an agrochemically active component, and the mixture was dissolved with heating at 60°C to form a liquefied mixture to which pretilachlor (common name; 10.31 parts by weight) was added as an agrochemically active component to prepare a homogeneous mixed solution.
(3) To the powdery mixture (1) was added the mixed solution (2) and OLFINE STG (2 parts by weight; acetylene glycol type; Nissin Chemical Industry Co., Ltd., Japan) as a surface-active agent and the mixture was kneaded with 10 parts by weight of a 20% aqueous gelatin solution (Nacalai Tesque, Inc., Japan) as a binder and extruded with a DOME GRAN granulator (Fuji Paudal Co., Ltd., Japan; type DG-L1) equipped with a screen of 1.2 mm. The granules were dried with a warm air stream (60°C) for 2 hours and sized (12 to 24 mesh) to give an agrochemical composition (granules).

### Example 8

The procedure of Example 7 was repeated except that the amount of GRAFLOW M was changed to 23.5 parts by weight, the amount of E-SPHERES SL150 was changed to 34.43 parts by weight and the amount of VINYCIZER 50 was changed to 16.48 parts by weight to give an agrochemical composition (granules).

### Example 9

The procedure of Example 7 was repeated except that the amount of E-SPHERES SL150 was changed to 42.67 parts by weight and AMYCOL 6H was omitted to give an agrochemical composition (granules).

### Example 10

The procedure of Example 7 was repeated except that the amount of GRAFLOW M was changed to 20 parts by weight and the amount of E-SPHERES SL150 was changed to 46.17 parts by weight to give an agrochemical composition (granules).

### Example 11

The procedure of Example 7 was repeated except that the amount of GRAFLOW M was changed to 26.8 parts by weight, the amount of E-SPHERES SL150 was changed to 40.37 parts by weight, both OLFINE STG and Newkalgen SX-C were omitted and 1 part by weight of Newkalgen EX-70 (70% sodium dioctylsulfosuccinate; Takemoto Oil & Fat Co., Ltd., Japan) and 3 parts by weight of ISOBAM 600 (isobutylene/maleic anhydride copolymer; Kuraray Co., Japan) were used as surface-active agents to give an agrochemical composition (granules).

### Example 12

The procedure of Example 7 was repeated except that the amount of GRAFLOW M was changed to 26.8 parts by weight, the amount of E-SPHERES SL150 was changed to 40.37 parts by weight, OLFINE STG was omitted and 1 part by weight of Newkalgen EX-70 was used as a surface-active agent to give an agrochemical composition (granules).

### Example 13

(1) Bensulfuron methyl (common name; 1.08 parts by weight) as an agrochemically active component, 2 parts by weight of Newkalgen EX-70 (70% sodium dioctylsulfosuccinate; Takemoto Oil & Fat Co., Ltd., Japan) as a surface-active agent, 3 parts by weight of AMYCOL 6H (enzymatically-modified dextrin (malto dextrin); Nippon Starch Chemical Co., Ltd., Japan), 5 parts by weight of casein (Nacalai Tesque, Inc., Japan) and 5 parts by weight of magnesium hydroxide (Nacalai Tesque, Inc., Japan) as binders, 10 parts by weight of Perlite #36 (Toko-Perlite Industry Co., Ltd., Japan) as a carrier and 42.38 parts by weight of E-SPHERES SL150 (Envirospheres Pty Ltd.; particle size range: 20 to 150 microns; average particle size: 100 microns) as a close-type hollow having a bulk density of less than 1 were used. All the components were blended into a homogeneous powdery mixture.
(2) To 15.76 parts by weight of VINYCIZER 50 (diisodecyl adipate; Kao Corporation, Japan) as an organic solvent was added cyhalofop butyl (common name; 3.94 parts by weight) as an agrochemically active component, and the mixture was dissolved with heating at 60°C to form a liquefied mixture to which pretilachlor (common name; 9.84 parts by weight) was added as an agrochemically active component to prepare a homogeneous mixed solution.
(3) To the powdery mixture (1) was added the mixed solution (2) followed by well mixing. The resultant mixture was kneaded with 10 parts by weight of a 20% aqueous gelatin solution (Nacalai Tesque, Inc., Japan) as a binder and extruded with a DOME GRAN granulator (Fuji Paudal Co., Ltd., Japan; type DG-L1) equipped with a screen of 1.2 mm to form granules. The resulting granules were dried with a warm air stream (60°C) for 2 hours and sized (12 to 24 mesh) to give an agrochemical composition (granules).

### Example 14

The procedure of Example 13 was repeated except that casein (5 parts by weight) was replaced with 5 parts by weight of sodium dihydrogen phosphate (Nacalai Tesque, Inc., Japan) to give an agrochemical composition (granules).

### Example 15

(1) Bensulfuron methyl (common name; 1.08 parts by weight) as an agrochemically active component, 2 parts by weight of Newkalgen EX-70 (70% sodium dioctylsulfosuccinate; Takemoto Oil & Fat Co., Ltd., Japan) as a surface-active agent, 5 parts by weight of sodium alginate (Nacalai Tesque, Inc., Japan) as a binder, 10 parts by weight of Perlite #36 (Toko-Perlite Industry Co., Ltd., Japan) as a carrier and 52.38 parts by weight of E-SPHERES SL150 (Envirospheres Pty Ltd.; particle size range: 20 to 150 microns; average particle size: 100 microns) as a close-type hollow having a bulk density of less than 1 were used. All the components were blended into a homogeneous powdery mixture.
(2) To 15.76 parts by weight of VINYCIZER 50 (diisodecyl adipate; Kao Corporation, Japan) as an organic solvent was added cyhalofop butyl (common name; 3.94 parts by weight) as an agrochemically active component, and the mixture was dissolved with heating at 60°C to form a liquefied mixture to which pretilachlor (common name; 9.84 parts by weight) was added as an agrochemically active component to prepare a homogeneous mixed solution.
(3) To the powdery mixture (1) was added the mixed solution (2) followed by well mixing. The mixture was kneaded with water and extruded with a DOME GRAN granulator (Fuji Paudal Co., Ltd., Japan; type DG-L1) equipped with a screen of 1.2 mm to form granules. The resulting granules were dried with a warm air stream (60°C) for 2 hours and sized (12 to 24 mesh) to give an agrochemical composition (granules).

### Example 16

The procedure of Example 15 was repeated except that sodium alginate (5 parts by weight) was replaced with 2 parts by weight of SANEKISU (calcium lignin sulfonate; Nippon Paper Industries Co., Ltd., Japan) and the amount of E-SPHERES SL150 was changed to 55.38 parts by weight to give an agrochemical composition (granules).

### Example 17

The procedure of Example 15 was repeated except that sodium alginate (5 parts by weight) was replaced with 5 parts by weight of casein (Nacalai Tesque, Inc., Japan) and 5 parts by weight of magnesium hydroxide (Nacalai Tesque, Inc., Japan) and the amount of E-SPHERES SL150 was changed to 47.38 parts by weight to give an agrochemical composition (granules).

### Example 18

The procedure of Example 15 was repeated except that sodium alginate (5 parts by weight) was replaced with 5 parts by weight of sodium dihydrogen phosphate (Nacalai Tesque, Inc., Japan) and 5 parts by weight of magnesium hydroxide (Nacalai Tesque, Inc., Japan) and the amount of E-SPHERES SL150 was changed to 47.38 parts by weight to give an agrochemical composition (granules).

### Example 19

The procedure of Example 15 was repeated except that sodium alginate (5 parts by weight) was replaced with 2 parts by weight of gum arabic (Iwaki Seiyaku Co., Ltd., Japan) and the amount of E-SPHERES SL150 was changed to 55.38 parts by weight to give an agrochemical composition (granules).

### Example 20

(1) Bensulfuron methyl (common name; 1.16 parts by weight) as an agrochemically active component, 2 parts by weight of Newkalgen EX-70 (70% sodium dioctylsulfosuccinate; Takemoto Oil & Fat Co., Ltd., Japan) and 1.5 parts by weight of ISOBAM 6.00 (isobutylene/maleic anhydride copolymer; Kuraray Co., Japan) as surface-active agents, 3 parts by weight of AMYCOL 6H (enzymatically modified dextrin (malto dextrin); Nippon Starch Chemical Co., Ltd., Japan) as a binder, 10 parts by weight of Perlite #36 (Toko-Perlite Industry Co., Ltd., Japan) as a carrier and 47.56 parts by weight of E-SPHERES SL150 (Envirospheres Pty Ltd.; particle size range: 20 to 150 microns; average particle size: 100 microns) as a close-type hollow having a bulk density of less than 1 were used. All the components were blended into a homogeneous powdery mixture.
(2) To 4.12 parts by weight of cyhalofop butyl (common name) as an agrochemically active component was added 16.48 parts by weight of VINYCIZER 50 (diisodecyl adipate; Kao Corporation, Japan) as an organic solvent, and the mixture was dissolved with heating at 60°C to form a liquefied mixture to which pretilachlor (common name; 10.18 parts by weight) was added as an agrochemically active component to prepare a homogeneous mixed solution.
(3) To the powdery mixture (1) was added the mixed solution (2) followed by well mixing. The resultant mixture was kneaded with 2 parts by weight of ACRYSOL G-200 (sodium acrylate homopolymer; Kao Corporation, Japan) as a surface-active agent and 10 parts by weight of a 20% aqueous gelatin solution (Nacalai Tesque, Inc., Japan) as a binder and extruded with a DOME GRAN granulator (Fuji Paudal Co., Ltd., Japan; type DG-L1) equipped with a screen of 1.2 mm to form granules. The resulting granules were dried with a warm air stream (60°C) for 2 hours and sized (12 to 24 mesh) to give an agrochemical composition (granules).

### Example 21

(1) Bensulfuron methyl (common name; 1.08 parts by weight) as an agrochemically active component, 2 parts by weight of Newkalgen EX-70 (70% sodium dioctylsulfosuccinate; Takemoto Oil & Fat Co., Ltd., Japan) as a surface-active agent, 10 parts by weight of AMYCOL 6H (enzymatically modified dextrin (malto dextrin); Nippon Starch Chemical Co., Ltd., Japan) as a binder, 14.94 parts by weight of Perlite #36 (Toko-Perlite Industry Co., Ltd., Japan) as a carrier and 49.82 parts by weight of E-SPHERES SL150 (Envirospheres Pty Ltd.; particle size range: 20 to 150 microns; average particle size: 100 microns) as a close-type hollow having a bulk density of less than 1 were used. All the components were blended into a homogeneous powdery mixture.
(2) To 7.88 parts by weight of VINYCIZER 50 (diisodecyl adipate; Kao Corporation, Japan) as an organic solvent was added cyhalofop butyl (common name; 3.94 parts by weight) as an agrochemically active component, and the mixture was dissolved with heating at 60°C to form a liquefied mixture to which pretilachlor (common name; 9.84 parts by weight) was added as an agrochemically active component to prepare a homogeneous mixed solution.
(3) To the powdery mixture (1) was added the mixed solution (2) followed by well mixing. The resultant mixture was kneaded with 10 parts by weight of a 5% aqueous solution of CELLOGEN 703A (carboxymethyl cellulose sodium; Dai-ichi Kogyo Seiyaku Co., Ltd, Japan) as a binder and extruded with a DOME GRAN granulator (Fuji Paudal Co., Ltd., Japan; type DG-L1) equipped with a screen of 1.2 mm to form granules. The resulting granules were dried with a warm air stream (60°C) for 2 hours and sized (12 to 24 mesh) to give an agrochemical composition (granules).

### Example 22

Bensulfuron methyl (0.67 part by weight), 19.48 parts by weight of sodium hydrogen carbonate, 6.5 parts by weight of citric acid anhydride, 10 parts by weight of dextrin (AMYCOL 6L (trade name); Nippon Starch Chemical Co., Ltd., Japan), 2 parts by weight of metal lignin sulfonate (Newkalgen WG-4 (trade name); Takemoto Oil & Fat Co., Ltd., Japan) and 2 parts by weight of sodium dialkyl sulfosuccinate (Newkalgen EX-70 (trade name); Takemoto Oil & Fat Co., Ltd., Japan) were mixed and pulverized with a centrifugal pulverizing machine (Nippon Seiki Co., Ltd., Japan; 1 mmφ screen) to prepare a pulverized mixture. Then 44.8 parts by weight of closed-type hollows (E-SPHERES SL-150 (trade name); Envirospheres Pty Ltd.) were added to the resultant mixture followed by mixing and the mixed powder was transferred to a mortar and admixed with 14.35 parts by weight of butachlor until a homogeneous mixture was obtained. To the resulting mixture was then added a 10% aqueous carboxymethyl cellulose sodium solution (2 parts by weight; CELLOGEN 7A (trade name); Dai-ichi Kogyo Seiyaku Co., Ltd, Japan) followed by mixing until a homogeneous mixture was obtained. The resulting mixture (15 g) was placed in a mortar (diameter: 40 mm; depth: 50 mm) and compressed (50 kg/cm²) with a tabletting machine (Handpress type SSP-10A; Shimadzu Corporation, Japan) to give tablets. Thereafter, the tablets were taken out from the mortar and dried in a thermostatic drying machine at 60°C for 2 hours to give 14.55 g of agrochemical composition (in tablets each having a diameter of 40 mm, a thickness of 12 mm and a density of 0.95 g/cm³).

### Example 23

The procedure of Example 22 was repeated except that the amount of bensulfuron methyl was changed from 0.67 part by weight to 0.33 part by weight, the amount of sodium hydrogen carbonate was changed from 19.48 parts by weight to 21.05 parts by weight and the amount of citric acid anhydride was changed from 6.5 parts by weight to 5.27 parts by weight to give 14.50 g of the agrochemical composition (in tablets each having a diameter of 40 mm, a thickness of 13 mm and a density of 0.89 g/cm³).

### Example 24

The procedure of Example 23 was repeated except that the amount of sodium hydrogen carbonate was changed from 21.05 parts by weight to 13.16 parts by weight and the amount of citric acid anhydride was changed from 5.27 parts by weight to 13.16 parts by weight to give 14.60 g of the agrochemical composition (in tablets each having a diameter of 40 mm, a thickness of 12 mm and a density of 0.97 g/cm³).

### Example 25

The procedure of Example 24 was repeated except that 0.33 part by weight of bensulfuron methyl was omitted, the amount of butachlor was changed from 14.35 parts by weight to 9.57 parts by weight, the amount of sodium hydrogen carbonate was changed from 13.16 parts by weight to 19.82 parts by weight, the amount of citric acid anhydride was changed from 13.16 parts by weight to 6.61 parts by weight and the amount of closed-type hollows (E-SPHERES SL-150 (trade name; Envirospheres Pty Ltd.) was changed from 44.8 parts by weight to 49.8 parts by weight to give 14.60 g of the agrochemical composition (in tablets each having a diameter of 40 mm, a thickness of 14 mm and a density of 0.83 g/cm³).

### Example 26

The procedure of Example 22 was repeated except that the amount of sodium hydrogen carbonate was changed from 19.48 parts by weight to 23.23 parts by weight, the amount of citric acid anhydride was changed from 6.5 parts by weight to 7.75 parts by weight and the amount of dextrin (AMYCOL 6L (trade name); Nippon Starch Chemical Co., Ltd., Japan) was changed from 10 parts by weight to 5 parts by weight to give 14.55 g of the agrochemical composition (in tablets each having a diameter of 40 mm, a thickness of 14 mm and a density of 0.83 g/cm³).

### Example 27

The procedure of Example 26 was repeated except that the amount of sodium hydrogen carbonate was changed from 23.23 parts by weight to 11.98 parts by weight, the amount of citric acid anhydride was changed from 7.75 parts by weight to 4 parts by weight and the amount of dextrin (AMYCOL 6L (trade name); Nippon Starch Chemical Co., Ltd., Japan) was changed from 5 parts by weight to 20 parts by weight to give 14.55 g of the agrochemical composition (in tablets each having a diameter of 40 mm, a thickness of 12 mm and a density of 0.97 g/cm³).

### Example 28

Bensulfuron methyl (0.67 part by weight), 19.48 parts by weight of sodium hydrogen carbonate, 6.5 parts by weight of citric acid anhydride, 10 parts by weight of dextrin (AMYCOL 6L (trade name); Nippon Starch Chemical Co., Ltd., Japan), 2 parts by weight of metal lignin sulfonate (Newkalgen WG-4 (trade name); Takemoto Oil & Fat Co., Ltd., Japan) and 2 parts by weight of sodium dialkyl sulfosuccinate (Newkalgen EX-70 (trade name); Takemoto Oil & Fat Co., Ltd., Japan) were mixed and pulverized with a centrifugal pulverizing machine (Nippon Seiki Co., Ltd., Japan; 1 mmφ screen) to prepare a pulverized mixture. Then 44.8 parts by weight of closed-type hollows (E-SPHERES SL-150 (trade name); Envirospheres Pty Ltd.) were added to the resultant mixture followed by mixing and the mixed powder was transferred to a mortar and admixed with 14.35 parts by weight of butachlor until a homogeneous mixture was obtained. Then to the mixture was added a 10% aqueous carboxymethyl cellulose sodium solution (2 parts by weight; CELLOGEN 7A (trade name); Dai-ichi Kogyo Seiyaku Co., Ltd, Japan) followed by mixing until a homogeneous mixture was obtained. The resulting mixture (930 g) was subjected to a continuous tabletting (compression applied being 40 kg/cm²) using a tabletting machine (HT-B18EH₃-S (diameter: 40 mm); K.K. Hata Tekkosho, Japan). The resulting wet products were dried in a thermostatic dryer at 60°C for 2 hours to give an agrochemical composition (46 tablets each having a diameter of 40 mm, a thickness of 18 mm, a density of 0.90 g/cm³ and a weight of 19.8 g).

### Example 29

Bensulfuron methyl (0.67 part by weight), 19.48 parts by weight of sodium hydrogen carbonate, 6.5 parts by weight of citric acid anhydride, 44.8 parts by weight of closed-type hollows (E-SPHERES SL-150 (trade name); Envirospheres Pty Ltd.), 10 parts by weight of dextrin (AMYCOL 6L (trade name); Nippon Starch Chemical Co., Ltd., Japan), 2 parts by weight of metal lignin sulfonate (Newkalgen WG-4 (trade name); Takemoto Oil & Fat Co., Ltd., Japan) and 2 parts by weight of sodium dialkyl sulfosuccinate (Newkalgen EX-70 (trade name); Takemoto Oil & Fat Co., Ltd., Japan) were well mixed in a mixer. To the mixture was then added butachlor (14.35 parts by weight) followed by well mixing in a mixer until a homogeneous mixture was resulted. Thereafter, a 10% aqueous carboxymethyl cellulose sodium solution (2 parts by weight; CELLOGEN 7A (trade name); Dai-ichi Kogyo Seiyaku Co., Ltd, Japan) was added to the resultant mixture followed by mixing until a homogeneous mixture was obtained. The resulting mixture (18 kg) was molded by a briquetting machine (type K-102, Otsuka Iron Works, Ltd., Japan; pocket size; 7 cc; molding pressure: 50 kg/cm²; charcoal ball-shaped) and the resulting wet products were dried in a thermostatic drying machine at 60°C for 2 hours to give an agrochemical composition (2769 tablets each having a density of 0.9 g/cm³ and a weight of 6.5 g).

### Example 30

Bensulfuron methyl (0.33 part by weight), 18.6 parts by weight of sodium hydrogen carbonate, 6.25 parts by weight of citric acid anhydride, 10 parts by weight of dextrin (AMYCOL 6L (trade name); Nippon Starch Chemical Co., Ltd., Japan), 2 parts by weight of metal lignin sulfonate (Newkalgen WG-4 (trade name); Takemoto Oil & Fat Co., Ltd., Japan) and 3 parts by weight of anhydrous boric acid were mixed followed by pulverizing in a centrifugal pulverizing machine (Nippon Seiki K.K., Japan; 1 mm ø screen) to prepare a pulverized mixture. To the pulverized mixture were added 44.8 parts by weight of closed-type hollows (trade name: E-SPHERES SL-150; Envirospheres Pty Ltd.), blended and then admixed with 14.82 parts by weight of butachlor followed by mixing. To the resultant mixture was added a 10% aqueous solution of carboxymethyl cellulose sodium (2 parts by weight; CELLOGEN 7A (trade name); Dai-ichi Kogyo Seiyaku, Japan) followed by mixing until a homogeneous mixture was obtained. The resulting mixture (15 g) was placed in a mortar of 40 mm diameter and 50 mm depth and compressed (50 kg/cm²) by a tabletting machine (Handpress type SSP-10A; Shimadzu Corporation, Japan) to give tablets. The tablets were taken out from the mortar and dried in a thermostatic drying machine at 60°C for 2 hours to give 14.75 g of an agrochemical composition (in tablets each having a diameter of 40 mm, a thickness of 12.4 mm and a density of 0.95 g/cm³).

### Example 31

The procedure of Example 30 was repeated except that anhydrous boric acid (3 parts by weight) was replaced with 5 parts by weight of magnesium hydroxide (heavy) and the amount of closed-type hollows (trade name: E-SPHERES SL-150; Envirospheres Pty Ltd.) was changed from 44.8 parts by weight to 42.8 parts by weight to give 14.7 g of an agrochemical composition (in tablets each having a diameter of 40 mm, a thickness of 12.9 mm and a density of 0.91 g/cm³).

### Example 32

The procedure of Example 30 was repeated except that anhydrous boric acid (3 parts by weight) was replaced with 5 parts by weight of magnesium hydroxide and the amount of closed-type hollows (trade name: E-SPHERES SL-150; Envirospheres Pty Ltd.) was changed from 44.8 parts by weight to 42.8 parts by weight to give 14.72 g of an agrochemical composition (in tablets each having a diameter of 40 mm, a thickness of 13.3 mm and a density of 0.88 g/cm³).

### Example 33

The procedure of Example 30 was repeated except that anhydrous boric acid (3 parts by weight) was replaced with 3 parts by weight of calcium hydroxide to give 14.74 g of an agrochemical composition (in tablets each having a diameter of 40 mm, a thickness of 13.0 mm and a density of 0.90 g/cm³).

### Example 34

The mixture prepared in the above Example 30 was molded by a briquetting machine (Otsuka Iron Works, Ltd., Japan; type K-102; pocket size 7 cc; molding pressure: 50 kg/cm²; charcoal ball-shaped) to give an agrochemical composition (in tablets).

### Example 35

A mixture which was prepared in the same manner as in the above Example 30 except that 0.33 part of bensulfuron methyl was omitted, the amount of sodium hydrogen carbonate was changed from 18.6 parts by weight to 17.38 parts by weight, the amount of citric acid anhydride was changed from 6.25 parts by weight to 5.8 parts by weight and dialkyl sulfosuccinate sodium (trade name: Newkalgen EX-70; Takemoto Oil & Fat Co., Ltd., Japan; 2 parts by weight) was further contained was molded with a briquetting machine (Otsuka Iron Works, Ltd., Japan; type K-102; pocket size 7 cc; molding pressure: 50 kg/cm²; charcoal ball-shaped) to give an agrochemical composition (in tablets).

### Example 36

Pyrazoxyfen (16 parts by weight), 60 parts by weight of sodium hydrogen carbonate, 20 parts by weight of citric acid anhydride and 1 part by weight of powdered egg white (EGGWHITES Chicken Dried; Sigma-Aldrich Japan) were blended, and admixed with 3 parts by weight of polyoxyethylene polyoxypropylene glycol (trade name: PEPOL B-181; Toho Kagaku K.K., Japan) and 2 ml of ethanol containing 0.4% water followed by mixing. The resultant mixture was flown into a cup-shaped aluminum mold, heated at 80°C for 2 minutes, allowed to cool and dried to give an agrochemical composition (each 10-gram preparation).

### Example 37

Chlomethoxyfen (4 parts by weight), 69 parts by weight of sodium hydrogen carbonate, 23 parts by weight of citric acid anhydride and 1 part by weight of powdered egg white (EGGWHITES Chicken Dried; Sigma-Aldrich Japan) were blended, and admixed with 3 parts by weight of polyoxyethylene polyoxypropylene glycol (trade name: PEPOL B-181; Toho Kagaku K.K., Japan) and 2 ml of ethanol containing 0.4% water followed by mixing. The resultant mixture was flown into a cup-shaped aluminum mold, heated at 80°C for 2 minutes, allowed to cool and dried to give an agrochemical composition (each 10-gram preparation).

### Example 38

Sodium hydrogen carbonate (64 parts by weight), 22 parts by weight of citric acid anhydride and 1 part by weight of powdered egg white (EGGWHITES Chicken Dried; Sigma-Aldrich Japan) were blended, and admixed with 10 parts by weight of butachlor, 3 parts by weight of polyoxyethylene polyoxypropylene glycol (trade name: ADEKA PLURONIC L61; Asahi Denka Kogyo K.K., Japan) and 10 ml of ethanol containing 0.5% water followed by mixing. The resultant mixture was flown into a round-shaped Tupperware molding plastic box, heated at, 80°C for 2 minutes, allowed to cool and dried to give an agrochemical composition (each 50-gram preparation).

### Example 39

Sodium hydrogen carbonate (57.75 parts by weight) and 19.25 parts by weight of malic acid were blended, and then admixed with 20 parts by weight of butachlor, 3 parts by weight of polyoxyethylene polyoxypropylene glycol (trade name: ADEKA PLURONIC L61; Asahi Denka Kogyo K.K., Japan) and 10 ml of ethanol containing 0.5% water followed by mixing. The resultant mixture was flown into a round-shaped Tupperware molding plastic box, heated at 80°C for 2 minutes, allowed to cool and dried to give an agrochemical composition (each 50-gram preparation).

### Example 40

Sodium hydrogen carbonate (64 parts by weight), 22 parts by weight of anhydrous citric acid and 1 part by weight of dextrin (trade name: AMYCOL 6H; Nippon Starch Chemical Co., Ltd., Japan) were blended, and then admixed with 10 parts by weight of butachlor and 3 parts by weight of polyoxyethylene polyoxypropylene glycol (trade name: PEPOL B-181; Toho Kagaku K.K., Japan). To the mixture was added 0.25 g of a high-molecular compound (trade name: SANFRESH ST-100; Sanyo Chemical Industries, Ltd., Japan) which was prepared in advance to contain 98% water followed by mixing. The mixture was flown into a cup-shaped molding aluminum box, heated at 80°C for 2 minutes, allowed to cool and dried to give an agrochemical composition (a 25-gram preparation).

### Test Example 1

Vats each having an area of 1/3000 ares were filled with soil, then flooded, plowed, next seeded with barnyardgrass (Echinochloa crus-galli L.) and the depth of flooding water was maintained at a level of 4 cm. When barnyardgrass grew to a 2.5 to 3 leaf stage, granules as obtained in Examples 1 and 7 were thrown onto the surface of the water at 500 g/10 ares.

Two weeks and four weeks after the treatment, barnyardgrass was visually observed for herbicidal growth inhibition. The herbicidal efficacies were evaluated by the growth-controlling degrees (%) ranging from 0 (equivalent to the non-treated area) to 100 (completely killed). The tests were carried out in duplex series and the mean value thereof was adopted. The results are shown in Table 1.

**Table 1**

| Examples | Growth-Controlling Degree (%) | |
|---|---|---|
| | After 2 Weeks | After 4 Weeks |
| 1 | 85 | 93 |
| 7 | 88 | 93 |

### Test Example 2

Rain gutters each having a dimension of 0.15 m wide and 4 m long were filled with soil, flooded, plowed, and then seeded with barnyardgrass (Echinochloa crus-galli L.), Japanese bulrush (Scirpus juncoides Roxb.), monochoria (Monochoria vaginalis var. plantaginea) and Japanese ribbon wapato (Urikawa) (Sagittaria pygmaea Miq.) and the depth of flooding water was maintained at a level of 4 cm. One day after the plowing, Japanese ribbon wapato root tubers were transplanted. When barnyardgrass grew to a 2.3 to 3 leaf stage, Japanese bulrush to a 2 to 2.3 leaf stage, monochoria to a 0.5 to 1.3 leaf stage and Japanese ribbon wapato to a 1.7 to 2.2 leaf stage, granules as prepared in Examples 1 and 7 were thrown at 500 g/10 ares onto the surface of the water at one end of the rain gutter.

Two weeks and four weeks after the treatment, each plant was visually observed for herbicidal growth inhibition. The herbicidal efficacies were evaluated by the growth-controlling degrees (%) ranging from 0 (equivalent to the non-treated area) to 100 (completely killed). The checking areas were partitioned from one end of the rain gutter to another end with intervals of 0.8 m. The tests were carried out in duplex series and the mean value thereof was adopted. The results are shown in Table 2 for 2 weeks post-treatment and in Table 3 for 4 weeks post-treatment, respectively.

**Table 2**

| Examples | Weeds | Growth-Controlling Degree (%) after 2 Weeks | | | | |
|---|---|---|---|---|---|---|
| | | Checked Areas | | | | |
| | | 0-0.8 | 0.8-1.6 | 1.6-2.4 | 2.4-3.2 | 3.2-4 |
| 1 | E. crus-galli L. | 99 | 99 | 98 | 92 | 78 |
| | S. juncoides | 85 | 88 | 90 | 85 | 83 |
| | M. vaginalis var. plantaginea | 99 | 97 | 99 | 97 | 95 |
| | S. pygmaea | 85 | 83 | 88 | 85 | 85 |
| 7 | E. crus-galli L. | 97 | 98 | 97 | 90 | 80 |
| | S. juncoides | 85 | 90 | 85 | 85 | 85 |
| | M. vaginalis var. plantaginea | 99 | 99 | 99 | 99 | 99 |
| | S. pygmaea | 85 | 90 | 90 | 85 | 85 |

**Table 3**

| Examples | Weeds | Growth-Controlling Degree (%) after 4 Weeks | | | | |
|---|---|---|---|---|---|---|
| | | Checked Areas | | | | |
| | | 0-0.8 | 0.8-1.6 | 1.6-2.4 | 2.4-3.2 | 3.2-4 |
| 1 | E. crus-galli L. | 99 | 99 | 99 | 75 | 50 |
| | S. juncoides | 93 | 93 | 95 | 88 | 70 |
| | M. vaginalis var. plantaginea | 100 | 100 | 98 | 95 | 65 |
| | S. pygmaea | 93 | 93 | 93 | 93 | 80 |
| 7 | E. crus-galli L. | 99 | 99 | 95 | 95 | 85 |
| | S. juncoides | 90 | 95 | 95 | 90 | 85 |
| | M. vaginalis var. plantaginea | 100 | 100 | 100 | 99 | 99 |
| | S. pygmaea | 95 | 95 | 95 | 90 | 90 |

### Test Example 3

Plastic vats each having a dimension of 0.54 m wide, 0.84 m long and 0.1 m high were filled with soil, flooded, plowed, then seeded with barnyardgrass (Echinochloa crus-galli L.), Japanese bulrush (Scirpus juncoides Roxb.), monochoria (Monochoria vaginalis var. plantaginea) and broad-leaf weeds (waterwort (Elatine triandra Schk.) and false pimpernel (Lindernia pyxidaria L.)) and the depth of flooding water was maintained at a level of 3.5 cm. When barnyardgrass grew to a 1 to 1.4 stage, Japanese bulrush to a 0.5 leaf stage and monochoria to a 0.3 leaf stage (prior to emergence of broad-leaf weeds), agrochemical compositions as prepared in Example 22 was thrown onto the surface of the water at predetermined amounts.

Two weeks and four weeks after the treatment, each plant was visually observed for herbicidal growth inhibition. The herbicidal efficacies were evaluated by the growth-controlling degrees (%) ranging from 0 (equivalent to the non-treated area) to 100 (completely killed). The checking areas were partitioned equally into nine where 1, 2 and 3 sections are set for the left row from top to bottom, 4, 5 and 6 for the medium row similarly and 7, 8 and 9 for the right row similarly. The tests were carried out in duplex series and the mean value thereof was adopted. The results are shown in Table 4 for 2 weeks post-treatment and in Table 5 for 4 weeks post-treatment, respectively.

**Table 4**

| Amount (g/10a.) | Checked Areas | Growth-Controlling Degree (%) after 2 Weeks | | | |
|---|---|---|---|---|---|
| | | E. crus-galli L. | S. juncoides | M. vaginalis var. plantaginea | broad-leaf weeds |
| 500 | 1 | 97 | 98 | 100 | 100 |
| | 2 | 97 | 96 | 100 | 100 |
| | 3 | 95 | 97 | 100 | 100 |
| | 4 | 93 | 96 | 100 | 100 |
| | 5 | 95 | 95 | 100 | 100 |
| | 6 | 97 | 96 | 100 | 100 |
| | 7 | 97 | 96 | 100 | 99 |
| | 8 | 98 | 95 | 100 | 100 |
| | 9 | 96 | 95 | 100 | 100 |

**Table 5**

| Amount (g/10a.) | Checked Areas | Growth-Controlling Degree (%) after 4 Weeks | | | |
|---|---|---|---|---|---|
| | | E. crus-galli L. | S. juncoides | M. vaginalis var. plantaginea | broad-leaf weeds |
| 500 | 1 | 99 | 99 | 100 | 100 |
| | 2 | 100 | 99 | 100 | 100 |
| | 3 | 98 | 100 | 100 | 100 |
| | 4 | 99 | 99 | 100 | 100 |
| | 5 | 99 | 99 | 100 | 100 |
| | 6 | 98 | 99 | 100 | 100 |
| | 7 | 97 | 99 | 100 | 99 |
| | 8 | 98 | 95 | 100 | 100 |
| | 9 | 98 | 99 | 100 | 100 |

### Test Example 4

Rain gutters each having a dimension of 0.15 m wide and 4 m long were filled with soil, flooded, plowed, and then seeded with barnyardgrass (Echinochloa crus-galli L.), Japanese bulrush (Scirpus juncoides Roxb.) and monochoria (Monochoria vaginalis var. plantaginea) and the depth of flooding water was maintained at a level of 3.5 cm. One day after the plowing, Japanese ribbon wapato (Urikawa) (Sagittaria pygmaea Miq.) root tubers were transplanted. When barnyardgrass grew to a 1.2 to 1.3 leaf stage, Japanese bulrush to a 0.5 to 1.1 leaf stage, monochoria to a 1.3 to 2 leaf stage and Japanese ribbon wapato to a primary leaf to 0.5 leaf stage, agrochemical compositions as prepared in Example 22 were thrown onto the surface of the water at one end of the rain gutter at predetermined amounts.

Two weeks and four weeks after the treatment, each plant was visually observed for herbicidal growth inhibition. The herbicidal efficacies were evaluated by the growth-controlling degrees (%) ranging from 0 (equivalent to the non-treated area) to 100 (completely killed). The checking areas were partitioned from one end of the rain gutter to another end with intervals of 0.8 m. The results are shown in Table 6 for 2 weeks post-treatment and in Table 7 for 4 weeks post-treatment, respectively.

**Table 6**

| Amount (g/10a.) | Weeds | Growth-Controlling Degree (%) after 2 Weeks | | | | |
|---|---|---|---|---|---|---|
| | | Checked Areas | | | | |
| | | 0-0.8 | 0.8-1.6 | 1.6-2.4 | 2.4-3.2 | 3.2-4 |
| 500 | E. crus-galli L. | 98 | 90 | 90 | 90 | 85 |
| | S. juncoides | 98 | 90 | 90 | 90 | 90 |
| | M. vaginalis var. plantaginea | 100 | 99 | 99 | 100 | 99 |
| | S. pygmaea | 98 | 95 | 95 | 95 | 90 |

**Table 7**

| Amount (g/10a.) | Weeds | Growth-Controlling Degree (%) after 4 Weeks | | | | |
|---|---|---|---|---|---|---|
| | | Checked Areas | | | | |
| | | 0-0.8 | 0.8-1.6 | 1.6-2.4 | 2.4-3.2 | 3.2-4 |
| 500 | E. crus-galli L. | 98 | 95 | 95 | 95 | 85 |
| | S. juncoides | 98 | 99 | 98 | 98 | 98 |
| | M. vaginalis var. plantaginea | 100 | 100 | 100 | 100 | 100 |
| | S. pygmaea | 99 | 99 | 99 | 98 | 98 |

### Test Example 5

Tablets from Examples 30 to 32 were placed in aluminum-laminated packing bags, heat-sealed and subjected to an accelerated test at 60°C for one week and at 50°C for one month, respectively, whereupon each agrochemically active component was checked for its time-course stability (degradation rate) and each bag for its expansion degree. The results are shown in Table 8 for the stability (degradation rate) while the results in Table 9 for the expansion degree of the bag.

**Table 8**

| Examples | Degradation Rate of Bensulfuron Methyl | |
|---|---|---|
| | at 60°C for 1 Week | at 50°C for 1 Month |
| 30 | 4.2 | 4.1 |
| 31 | 7.9 | 6.0 |
| 32 | 8.7 | 6.8 |

**Table 9**

| Examples | Expansion of the Bag (Visually checked) | |
|---|---|---|
| | at 60°C for 1 Week | at 50°C for 1 Month |
| 30 | - to + | - to + |
| 31 | + | + |
| 32 | + | + |

| | | |
|---|---|---|
| -: no expansion +: in such a degree that it was hard to judge whether an expansion took place or not ++: an expansion was apparently noted +++: an expansion to an extent of being broken was noted | | |

### Test Example 6

Agrochemical compositions as prepared in Examples were thrown onto the central area of 1 are (10 m x 10 m) paddy field. With respect to their floating property, effervescent property, bubbling time and traces of the treatment, the results as shown in Table 10 were obtained. With respect to their herbicidal efficacy and adverse effect on the 30th day after the treatment, the results as shown in Table 11 were obtained. Areas non-treated with the chemicals were set in the said paddy field and used as control areas for the herbicidal efficacy wherein it was found that emergence of weeds (barnyardgrass (Echinochloa crus-galli L.), monochoria (Monochoria vaginalis var. plantaginea), and Japanese bulrush (Scirpus juncoides Roxb.)) was vigorous in all cases.

### (1) Floating property

○ : floated on the surface of the water after being poured
Δ : sedimented to the bottom and then floated
× : sedimented to the bottom and no floatation noted

### (2) Effervescent property

○ : bubbled after being poured
× : not bubbled after being poured

### (3) Traces of the treatment

None: no trace of the treatment was noted Medium: slight trace of the treatment was noted big: trace of the treatment was noted

### (4) Herbicidal efficacy at four corners of paddy field 0 (none) to 10 (completely killed)

### (5) Damage of rice plant at the center of paddy field 0 (none) to 10 (died)

**Table 10**

| Examples | Floating Property | Effervescent Property | Bubbled Time (min) | Trace of Treatment after 30 minutes |
|---|---|---|---|---|
| 38 | ○ | ○ | 4 | none |
| 39 | ○ | ○ | 4 | none |

**Table 11**

| Examples | Numbers of Applied Compositions | Damage by Chemicals at Central Area | Efficacy at 4 Corners | | |
|---|---|---|---|---|---|
| | | | E. crus-galli L. | M. vaginalis var. plantaginea | S. juncoides |
| 38 | 2 | 0 | 10 | 10 | 10 |
| 39 | 1 | 0 | 10 | 10 | 10 |

### Industrial Applicability

The agrochemical composition of the present invention floats without sinking in the water of paddy fields, whereby in the case where it contains a disintegrating agent the said agrochemical composition is disintegrated owing to the said disintegrating agent and the agrochemically active components therein diffuse all over a broad area by an action of a surface-active agent. Accordingly, merely local applications of the agrochemical composition lead to diffusion of the agrochemically active components throughout the whole area of the paddy field without remaining at the agrochemical-applied sites whereby it is possible to control noxious organisms including weeds without giving adverse effects on rice and to reduce the labor of application to the paddy fields greatly. In addition, the agrochemical composition of the present invention has an excellent property of floating on water, whereby neither its traces nor agrochemically active component residues are left near the points to which the chemicals are applied. Further, the agrochemical composition of the present invention can be manufactured merely by a simple process whereby there is no need of a compression molding at high pressure requiring a specially sophisticated equipment. Accordingly, the manufacturing cost can be much saved. As such, the agrochemical composition of the present invention is of a highly practical value.

## Claims

1. A water-buoyant agrochemical composition for a paddy field which comprises not only at least an agrochemically active component and a surface-active agent, but also
(1) bubbles besides a carbonate and a solid acid, said bubbles are obtainable by partially reacting a carbonate and a solid acid with water or a water containing substances,
(2) closed type hollows having a bulk density of less than 1 g/cm³, being hollow spheres or micro balloons, which are made of ceramics, or
(3) (i) closed type hollows having a bulk density of less than 1 g/cm³, being hollow spheres or micro balloons, which are made of ceramics,
(ii) a binder, and
(iii) a disintegrating agent.

2. The water-buoyant agrochemical composition according to claim 1, which is a granular agrochemical composition, wherein the composition contains not only an agrochemically active component and a surface-active agent but also closed-type hollows having a bulk density of less than 1 g/cm³, which are made of ceramics.

3. The agrochemical composition according to claim 1, wherein the composition contains not only an agrochemically active component and a surface-active agent, but also
(i) closed type hollows having a bulk density of less than 1 g/cm³, being hollow spheres or micro balloons, which are made of ceramics,
(ii) a binder, and -
(iii) a disintegrating agent,
and has a density of less than 1 g/cm³.

4. The water-buoyant agrochemical tablet composition according to claim 1, which is an agrochemical tablet composition, wherein the composition has a density of less than 1 g/cm³ and contains not only an agrochemically active component and a surface-active agent, but also
(i) closed type hollows having a bulk density of less than 1 g/cm³, being hollow spheres or micro balloons, which are made of ceramics,
(ii) a binder, and
(iii) a disintegrating agent.

5. The agrochemical composition according to claim 1, 2, 3, or 4, wherein the composition is coated with a water-soluble film.

6. The agrochemical composition according to claim 1, 2, 3, 4 or 5, wherein the agrochemically active component is an effective component of weed-killer.

7. The agrochemical composition according to claim 1, 2, 3, 4, 5, or 6, wherein the composition contains a stabilizer.

8. The agrochemical composition according to claim 1, 3 or 4, wherein the disintegrating agent comprises a carbonate and a solid acid.

9. A method for applying a water-buoyant agrochemical composition for a paddy field which comprises a step of applying the water-buoyant agrochemical composition directly to a flooded paddy fieldwherein the water-buoyant agrochemical composition comprises not only at least an agrochemically active component and a surface-active agent, but also
(1) bubbles besides a carbonate and a solid acid, said bubbles are obtainable by partially reacting a carbonate and a solid acid with water or a water containing substance,
(2) closed type hollows having a bulk density of less than 1 g/cm³, being hollow spheres or micro balloons, which are made of ceramics, or
(3)
(i) closed type hollows having a bulk density of less than 1 /g/cm³ being hollow spheres or micro balloons, which are made of ceramics,
(ii) a binder, and
(iii) a disintegrating agent.

10. The method according to claim 9, in which the water-buoyant agrochemical composition is directly applied to a flooded paddy field,wherein said agrochemical composition is granular for a paddy field and comprises an agrochemically active component, closed-type hollows having a bulk density of less than 1 g/cm³, which are made of ceramics, and a surface-active agent.

11. The method according to claim 9, in which the water-buoyant agrochemical composition is directly applied to a flooded paddy field,wherein said agrochemical composition is in the form of a tablet with a density of less than 1 g/cm³ for a paddy field and comprises an agrochemically active component, a surface-active agent, closed-type hollows having a bulk density of less than 1 g/cm³, being hollow spheres or micro balloons, which are made of ceramics, a binder and a disintegrating agent.

12. A process for the manufacture of a water-buoyant agrochemical tablet composition for a paddy field, which comprises a tableting process wherein
(1) the compression degree with a tableting machine ranges from 1 to 150 kg/cm² in the manufacture of tablets and
(2) the tablet composition has a density of less than 1 g/cm³, and comprises
(i) an agrochemically active component,
(ii) a surface-active agent,
(iii) closed-type hollows having a bulk density of less than 1 g/cm³, being hollow spheres or micro balloons, which are made of ceramics,
(iv) a binder and
(v) a disintegrating agent.

## Patentansprüche

1. Eine agrochemische Zusammensetzung mit Auftrieb in Wasser für ein Reisfeld, die nicht nur eine agrochemisch aktive Komponente und ein oberflächenaktives Mittel umfasst, sondern auch
(1) Blasen neben Carbonat und einer festen Säure, wobei die Blasen erhältlich sind durch teilweise Abreaktion eines Carbonats und einer festen Säure mit Wasser oder einer Wasser-enthaltenden Substanz,
(2) Hohlkörper vom geschlossenen Typ mit einer Schüttdichte von weniger als 1 g/cm³, die Hohlkugeln oder Mikrohohtperlen sind, die aus Keramik aufgebaut sind, oder
(3)
(i) Hohlkörper vom geschlossenen Typ mit einer Schüttdichte von weniger als 1 g/cm³, die Hohlkugeln oder Mikrohohlperlen sind, die aus Keramik aufgebaut sind,
(ii) ein Bindemittel und
(iii) ein Aufschlußmittel.

2. Die agrochemische Zusammensetzung mit Auftrieb in Wasser nach Anspruch 1, die eine körnige agrochemische Zusammensetzung ist, wobei die Zusammensetzung nicht nur eine agrochemisch aktive Komponente und ein oberflächenaktives Mittel, sondern auch Hohlkörper vom geschlossenen Typ mit einer Schüttdichte von weniger als 1 g/cm³ enthält, die aus Keramik aufgebaut sind.

3. Die agrochemische Zusammensetzung nach Anspruch 1, wobei die Zusammensetzung nicht nur eine agrochemisch aktive Komponente und ein oberflächenaktives Mittel enthält, sondern auch
(i) Hohlkörper vom geschlossenen Typ mit einer Schüttdichte von weniger als 1 g/cm³, die Hohlkugeln oder Mikrohohlperlen sind, die aus Keramik aufgebaut sind,
(ii) ein Bindemittel, und
(iii) ein Aufschlußmittel, und die eine Dichte von weniger als 1g/cm³ aufweist.

4. Die agrochemische Tablettenzusammensetzung mit Auftrieb in Wasser nach Anspruch 1, die eine agrochemische Tablettenzusammensetzung ist in der die Zusammensetzung eine Dichte von weniger als 1g/cm³ aufweist und nicht nur eine agrochemisch aktive Komponente und ein oberflächenaktives Mittel enthält, sondern auch
(i) Hohlkörper vom geschlossenen Typ mit einer Schüttdichte von weniger als 1g/cm³, die Hohlkörper oder Mikrohohlperlen sind, die aus Keramik aufgebaut sind,
(ii) ein Bindemittel, und
(iii) ein Aufschlußmittel.

5. Die agrochemische Zusammensetzung nach Anspruch 1, 2, 3 oder 4, wobei die Zusammensetzung mit einem wasserlöslichen Film beschichtet ist.

6. Die agrochemische Zusammensetzung nach Anspruch 1, 2, 3, 4, oder 5, wobei die agrochemisch aktive Komponente eine wirksame Unkrautvernichtende Komponente ist.

7. Die agrochemische Zusammensetzung nach Anspruch 1, 2, 3, 4, 5 oder 6, wobei die Zusammensetzung einen Stabilisator enthält.

8. Die agrochemische Zusammensetzung nach Anspruch 1, 3 oder 4, wobei das Aufschlußmittel ein Carbonat und eine feste Säure umfasst.

9. Verfahren zur Anwendung einer agrochemischen Zusammensetzung mit Auftrieb in Wasser auf einem Reisfeld, das umfasst eine Stufe einer Anwendung der agrochemischen Zusammensetzung mit Auftrieb in Wasser direkt auf ein geflutetes Reisfeld wobei die agrochemische Zusammensetzung mit Auftrieb in Wasser nicht nur mindestens eine agrochemisch aktive Komponente und ein oberflächenaktives Mittel umfasst, sondern auch
(1) Blasen neben einem Carbonat und einer festen Säure, wobei die Blasen erhältlich sind durch teilweise Abreaktion eines Carbonats und einer festen Säure mit Wasser oder einer Wasser enthaltenden Substanz.
(2) Hohlkörper vom geschlossenen Typ mit einer Schüttdichte von weniger als 1g/cm³, die Hohlkugeln oder Mikrohohlperlen sind, die aus Keramik aufgebaut sind, oder
(3)
(i) Hohlkörper vom geschlossenen Typ mit einer Schüttdichte von weniger als 1 g/cm³, die Hohlkugeln oder Mikrohohlperlen sind, die aus Keramik aufgebaut sind.
(ii) ein Bindemittel, und
(iii) ein Aufschlußmittel.

10. Das Verfahren nach Anspruch 9 in dem die agrochemische Zusammensetzung mit Auftrieb in Wasser direkt auf ein geflutetes Reisfeld angewendet wird, wobei die agrochemische Zusammensetzung für ein Reisfeld körnig ist und eine agrochemisch aktive Komponente, Hohlkörper vom geschlossenen Typ mit einer Schüttdichte von weniger als 1 g/cm³, die aus Keramik aufgebaut sind, und ein oberflächenaktives Mittel umfasst.

11. Das Verfahren nach Anspruch 9 in dem die agrochemische Zusammensetzung mit Auftrieb in Wasser direkt auf ein geflutetes Reisfeld angewendet wird, wobei die agrochemische Zusammensetzung für das Reisfeld in Form einer Tablette vorliegt mit einer Dichte von weniger als 1 g/cm³ und eine agrochemisch aktive Komponente, ein oberflächenaktives Mittel, Hohlkörper vom geschlossenen Typ mit einer Schüttdichte von weniger als 1g/cm³, die Hohlkugeln oder Mikrohohlperlen sind, die aus Keramik aufgebaut sind, ein Bindemittel und ein Aufschlußmittel umfasst.

12. Verfahren zur Herstellung einer agrochemischen Tablettenzusammensetzung mit Auftrieb in Wasser für ein Reisfeld, das umfasst ein Tablettierbverfahren in dem
(1) der Kompressionsgrad mit einer Tablettiermaschine im Bereich von 1 bis 150 kg/cm² bei der Herstellung von Tabletten liegt, und
(2) die Tablettenzusammensetzung eine Dichte von weniger als 1g/cm³ aufweist und umfasst
(i) eine agrochemisch-aktive Komponente,
(ii) ein oberflächenaktives Mittel,
(iii) Hohlkörper vom geschlossenen Typ mit einer Schüttdichte von weniger als 1g/cm³, die Hohlkugeln oder Mikrohohlperlen sind, die aus Keramik aufgebaut sind,
(iv) ein Bindemittel, und
(v) ein Aufschlußmittel.

## Revendications

1. Composition agrochimique pouvant flotter sur l'eau pour rizière qui comprend non seulement au moins un composant actif du point de vue agrochimique et un agent tensioactif, mais aussi
(1) des bulles en plus d'un carbonate et d'un acide solide, lesdites bulles pouvant être obtenues par réaction partielle d'un carbonate et d'un acide solide avec de l'eau ou une substance contenant de l'eau,
(2) des creux fermés présentant une masse volumique apparente inférieure à 1 g/cm³, qui sont des sphères creuses ou des microballons, faits en céramique, ou
(3)
(i) des creux fermés présentant une masse volumique apparente inférieure à 1 g/cm³, qui sont des sphères creuses ou des microballons, faits en céramique,
(ii) un liant, et
(iii)un agent désintégrant.

2. Composition agrochimique pouvant flotter sur l'eau selon la revendication 1, qui est une composition agrochimique granulaire, laquelle composition contient non seulement un composant actif du point de vue agrochimique et un agent tensioactif, mais aussi des creux fermés présentant une masse volumique apparente inférieure à 1 g/cm³, faits en céramique.

3. Composition agrochimique pouvant flotter sur l'eau selon la revendication 1, laquelle composition contient non seulement un composant actif du point de vue agrochimique et un agent tensioactif, mais aussi
(i) des creux fermés présentant une masse volumique apparente inférieure à 1 g/cm³, qui sont des sphères creuses ou des microballons, faits en céramique,
(ii) un liant, et
(iii)un agent désintégrant,
et présente une masse volumique inférieure à 1 g/cm³.

4. Composition agrochimique pouvant flotter sur l'eau sous forme de comprimés selon la revendication 1, qui est une composition agrochimique en comprimés, laquelle composition présente une masse volumique inférieure à 1 g/cm³ et contient non seulement un composant actif du point de vue agrochimique et un agent tensioactif, mais aussi
(i) des creux fermés présentant une masse volumique apparente inférieure à 1 g/cm³, qui sont des sphères creuses ou des microballons, faits en céramique,
(ii) un liant, et
(iii)un agent désintégrant.

5. Composition agrochimique selon la revendication 1, 2, 3 ou 4, laquelle composition est revêtue d'un film soluble dans l'eau.

6. Composition agrochimique selon la revendication 1, 2, 3, 4 ou 5, dans laquelle le composant actif du point de vue agrochimique est un composant efficace pour tuer les mauvaises herbes.

7. Composition agrochimique selon la revendication 1, 2, 3, 4, 5 ou 6, laquelle composition contient un stabilisant.

8. Composition agrochimique selon la revendication 1, 3 ou 4, dans laquelle l'agent désintégrant comprend un carbonate et un acide solide.

9. Procédé pour appliquer une composition agrochimique pouvant flotter sur l'eau destinée à une rizière, qui comprend une étape consistant à appliquer la composition agrochimique pouvant flotter sur l'eau directement sur une rizière inondée, dans lequel la composition agrochimique pouvant flotter sur l'eau comprend non seulement au moins un composant actif du point de vue agrochimique et un agent tensioactif, mais aussi
(1) des bulles en plus d'un carbonate et d'un acide solide, lesdites bulles pouvant être obtenues par réaction partielle d'un carbonate et d'un acide solide avec de l'eau ou une substance contenant de l'eau,
(2) des creux fermés présentant une masse volumique apparente inférieure à 1 g/cm³, qui sont des sphères creuses ou des microballons, faits en céramique, ou
(3)
(i) des creux fermés présentant une masse volumique apparente inférieure à 1 g/cm³, qui sont des sphères creuses ou des microballons, faits en céramique,
(ii) un liant, et
(iii)un agent désintégrant.

10. Procédé selon la revendication 9, dans lequel la composition agrochimique pouvant flotter sur l'eau est appliquée directement sur une rizière inondée, dans lequel la composition agrochimique pouvant flotter sur l'eau est une composition granulaire pour rizière qui comprend un composant actif du point de vue agrochimique, des creux fermés présentant une masse volumique apparente inférieure à 1 g/cm³, faits en céramique, et un agent tensioactif.

11. Procédé selon la revendication 9, dans lequel la composition agrochimique pouvant flotter sur l'eau est appliquée directement sur une rizière inondée, dans lequel la composition agrochimique pouvant flotter sur l'eau est sous la forme de comprimés présentant une masse volumique apparente inférieure à 1 g/cm³, est destinée à une rizière, et comprend un composant actif du point de vue agrochimique, un agent tensioactif, des creux fermés présentant une masse volumique apparente inférieure à 1 g/cm³, qui sont des sphères creuses ou des microballons, faits en céramique, un liant, et un agent désintégrant.

12. Procédé pour la fabrication d'une composition agrochimique pouvant flotter sur l'eau pour rizière sous forme de comprimés, qui comprend un procédé de mise sous forme de comprimés dans lequel
(1) le degré de compression avec la machine de formation de comprimés est situé dans la plage allant de 1 à 150 kg/cm² lors de la fabrication des comprimés et
(2) la composition des comprimés présente une masse volumique inférieure à 1 g/cm³, et comprend
(i) un composant actif du point de vue agrochimique,
(ii) un agent tensioactif,
(iii)des creux fermés présentant une masse volumique apparente inférieure à 1 g/cm³, qui sont des sphères creuses ou des microballons, faits en céramique,
(iv) un liant et
(v) un agent désintégrant.
